# EUROPEAN PATENT APPLICATION

(11) **EP 4 714 739 A1**
(43) Date of publication of application: **25.03.2026**
(21) Application number: 24807242.3
(22) Date of filing: 15.05.2024
(51) Int. Cl.: B60N 2/64, B60N 2/66, B60N 2/90

(54) **VEHICLE SEAT**

(30) Priority: 16.05.2023 US 202363502547 P; 16.05.2023 US 202363502551 P
(71) Applicant: TS Tech Co., Ltd., Asaka-shi, Saitama 351-0012 (JP)
(72) Inventor: MIZOI Kensuke, Shioya-gun, Tochigi 329-1217 (JP); YAMAUCHI Naoto, Shioya-gun, Tochigi 329-1217 (JP); PARK Heehyeok, Shioya-gun, Tochigi 329-1217 (JP)
(74) Representative: Dehns
(86) International application number: PCT/JP2024/018005
(87) International publication number: WO 2024/237291

(57) **Abstract**

[TASK]

To accurately determine a posture of an occupant on a vehicle seat.

[SOLUTION]

A vehicle seat 1 includes a seat cushion 3 and a seatback 4. The seatback includes: a seatback frame 21; a waist pressure receiving part 51 provided on the seatback frame to support a waist of an occupant; left and right shoulder pressure receiving parts 52 provided on the seatback frame above the waist pressure receiving part to support left and right shoulder portions of the occupant; a pad 22 supported by the seatback frame, the waist pressure receiving part, and the left and right shoulder pressure receiving parts; multiple front fluid bags 61 arranged vertically on a front surface of the pad; and a control device 78 that determines a posture of the occupant based on internal pressures of the multiple front fluid bags. An upper end fluid bag 61A which is disposed highest among the multiple front fluid bags is disposed between the left and right shoulder pressure receiving parts as seen from front.

## Description

### TECHNICAL FIELD

The present invention relates to a vehicle seat.

### BACKGROUND ART

Patent Document 1 discloses a seat capable of determining the posture of the occupant in a seated state. The seat includes multiple airbags arranged in the up-down direction on the seatback, an air pump for supplying compressed air to the multiple airbags, multiple pressure sensors for respectively detecting pressures in the multiple airbags, and a control device that controls the air pump and determines the posture of the occupant. The control device supplies compressed air to each of the airbags, measures the time required for the pressure of each airbag to reach a predetermined value, and determines the posture of the occupant based on the measured times.

### PRIOR ART DOCUMENT(S)

### PATENT DOCUMENT(S)

Patent Document 1: JP2021-123159A

### SUMMARY OF THE INVENTION

### TASK TO BE ACCOMPLISHED BY THE INVENTION

In such a vehicle seat, there is a demand to determine the posture of the occupant more accurately.

In view of the foregoing background, an object of the present invention is to accurately determine the posture of the occupant on a vehicle seat.

### MEANS TO ACCOMPLISH THE TASK

To achieve the above object, one aspect of the present invention is a vehicle seat (1) comprising a seat cushion (3) and a seatback (4), the seatback comprising: a seatback frame (21); a waist pressure receiving part (51) provided on the seatback frame to support a waist of an occupant; left and right shoulder pressure receiving parts (52) provided on the seatback frame above the waist pressure receiving part to support left and right shoulder portions of the occupant; a pad (22) supported by the seatback frame, the waist pressure receiving part, and the left and right shoulder pressure receiving parts; multiple front fluid bags (61) arranged vertically on a front surface of the pad; and a control device (78) that determines a posture of the occupant based on internal pressures of the multiple front fluid bags, wherein an upper end fluid bag (61A) which is disposed highest among the multiple front fluid bags is disposed between the left and right shoulder pressure receiving parts as seen from front.

According to this aspect, the upper end fluid bag is disposed in a relatively high portion of the seatback. In an upper body of the occupant seated on the vehicle seat, an upper portion including the shoulders tends to move more easily depending on the posture than a lower portion including the waist. Therefore, by detecting the internal pressure of the upper end fluid bag, the control device can accurately determine the posture of the occupant.

In the above aspect, the vehicle seat may comprise multiple rear fluid bags (65) arranged vertically between a front surface of the waist pressure receiving part and a rear surface of the pad, wherein the multiple rear fluid bags may have overlapping parts (66) that overlap each other as seen in a front-rear direction, and the upper end fluid bag may be disposed higher than the overlapping parts as seen from front.

According to this aspect, the upper end fluid bag can be disposed at a relatively high position in the seatback. As a result, the posture of the occupant can be determined accurately with the upper end fluid bag.

In the above aspect, at least one of the multiple front fluid bags may overlap the overlapping part as seen from front.

According to this aspect, at least one of the front fluid bags is supported by the overlapping part from the rear, and thus, can properly receive the load from the back of the occupant.

In the above aspect, the waist pressure receiving part and the left and right shoulder pressure receiving parts may be coupled to each other by left and right coupling parts (48), and the upper end fluid bag may overlap the left and right coupling parts as seen from front.

According to this aspect, the upper end fluid bag is supported by the coupling parts from the rear, and thus, can properly receive the load from the back of the occupant.

In the above aspect, the waist pressure receiving part and the left and right shoulder pressure receiving parts may be coupled to each other by left and right coupling parts, and the upper end fluid bag may be disposed not to overlap the left and right coupling parts as seen from front.

In the above aspect, a blower (57) may be supported on the seatback frame, and each of the multiple rear fluid bags may be disposed forward of the blower.

In the above aspect, the seatback frame may comprise left and right side members (41) that extend vertically and an upper member (42) that extends laterally and is joined to upper ends of the left and right side members, and the upper end fluid bag may be disposed higher than joining parts (46) of the left and right side members with the upper member.

According to this aspect, the upper end fluid bag can be disposed at a relatively high position in the seatback. As a result, the posture of the occupant can be determined accurately with the upper end fluid bag.

In the above aspect, the seatback frame may comprise left and right side members (41) that extend vertically and an upper member (42) that extends laterally and is joined to upper ends of the left and right side members, and the upper end fluid bag may be disposed lower than joining parts (46) of the left and right side members with the upper member.

In the above aspect, a lower end of the upper end fluid bag may be disposed higher than a lower end of each of the left and right shoulder pressure receiving parts.

According to this aspect, the upper end fluid bag can be disposed at a relatively high position in the seatback. As a result, the posture of the occupant can be determined accurately with the upper end fluid bag.

In the above aspect, an upper end of the upper end fluid bag may be disposed lower than an upper end of each of the left and right shoulder pressure receiving parts.

According to this aspect, the upper end fluid bag can be disposed at a relatively high position in the seatback. As a result, the posture of the occupant can be determined accurately with the upper end fluid bag.

### EFFECT OF THE INVENTION

One aspect of the present invention is a vehicle seat (1) comprising a seat cushion (3) and a seatback (4), the seatback comprising: a seatback frame (21); a waist pressure receiving part (51) provided on the seatback frame to support a waist of an occupant; left and right shoulder pressure receiving parts (52) provided on the seatback frame above the waist pressure receiving part to support left and right shoulder portions of the occupant; a pad (22) supported by the seatback frame, the waist pressure receiving part, and the left and right shoulder pressure receiving parts; multiple front fluid bags (61) arranged vertically on a front surface of the pad; and a control device (78) that determines a posture of the occupant based on internal pressures of the multiple front fluid bags, wherein an upper end fluid bag (61A) which is disposed highest among the multiple front fluid bags is disposed between the left and right shoulder pressure receiving parts as seen from front.

According to this aspect, the upper end fluid bag is disposed in a relatively high portion of the seatback. In an upper body of the occupant seated on the vehicle seat, an upper portion including the shoulders tends to move more easily depending on the posture than a lower portion including the waist. Therefore, by detecting the internal pressure of the upper end fluid bag, the control device can accurately determine the posture of the occupant.

In the above aspect, the vehicle seat may comprise multiple rear fluid bags (65) arranged vertically between a front surface of the waist pressure receiving part and a rear surface of the pad, wherein the multiple rear fluid bags may have overlapping parts (66) that overlap each other as seen in a front-rear direction, and the upper end fluid bag may be disposed higher than the overlapping parts as seen from front.

According to this aspect, the upper end fluid bag can be disposed at a relatively high position in the seatback. As a result, the posture of the occupant can be determined accurately with the upper end fluid bag.

In the above aspect, at least one of the multiple front fluid bags may overlap the overlapping part as seen from front.

According to this aspect, at least one of the front fluid bags is supported by the overlapping part from the rear, and thus, can properly receive the load from the back of the occupant.

In the above aspect, the waist pressure receiving part and the left and right shoulder pressure receiving parts may be coupled to each other by left and right coupling parts (48), and the upper end fluid bag may overlap the left and right coupling parts as seen from front.

According to this aspect, the upper end fluid bag is supported by the coupling parts from the rear, and thus, can properly receive the load from the back of the occupant.

In the above aspect, the waist pressure receiving part and the left and right shoulder pressure receiving parts may be coupled to each other by left and right coupling parts, and the upper end fluid bag may be disposed not to overlap the left and right coupling parts as seen from front.

In the above aspect, a blower (57) may be supported on the seatback frame, and each of the multiple rear fluid bags may be disposed forward of the blower.

In the above aspect, the seatback frame may comprise left and right side members (41) that extend vertically and an upper member (42) that extends laterally and is joined to upper ends of the left and right side members, and the upper end fluid bag may be disposed higher than joining parts (46) of the left and right side members with the upper member.

According to this aspect, the upper end fluid bag can be disposed at a relatively high position in the seatback. As a result, the posture of the occupant can be determined accurately with the upper end fluid bag.

In the above aspect, the seatback frame may comprise left and right side members (41) that extend vertically and an upper member (42) that extends laterally and is joined to upper ends of the left and right side members, and the upper end fluid bag may be disposed lower than joining parts (46) of the left and right side members with the upper member.

In the above aspect, a lower end of the upper end fluid bag may be disposed higher than a lower end of each of the left and right shoulder pressure receiving parts.

According to this aspect, the upper end fluid bag can be disposed at a relatively high position in the seatback. As a result, the posture of the occupant can be determined accurately with the upper end fluid bag.

In the above aspect, an upper end of the upper end fluid bag may be disposed lower than an upper end of each of the left and right shoulder pressure receiving parts.

According to this aspect, the upper end fluid bag can be disposed at a relatively high position in the seatback. As a result, the posture of the occupant can be determined accurately with the upper end fluid bag.

### BRIEF DESCRIPTION OF THE DRAWINGS

[Figure 1] A perspective view of a seat according to an embodiment
[Figure 2] A perspective view of a frame of the seat
[Figure 3] A front view of a seatback frame
[Figure 4] A sectional view of a seatback
[Figure 5] A block diagram showing a configuration of the seat
[Figure 6] A block diagram showing a connection configuration of a fluid supply source and fluid bags
[Figure 7] A flowchart showing an example of posture determination control
[Figure 8] A flowchart showing an example of posture determination control
[Figure 9] A sectional view of the seatback
[Figure 10] An explanatory diagram of a heater
[Figure 11] A sectional view showing a front member
[Figure 12] A perspective view of a slide rail
[Figure 13] A cross-sectional perspective view of an upper rail
[Figure 14] An explanatory diagram showing a seatback pad
[Figure 15] An explanatory diagram of a seat cushion pad
[Figure 16] A sectional view of a front portion of a seat cushion
[Figure 17] A perspective view of the seat

### MODE(S) FOR CARRYING OUT THE INVENTION

In the following, an embodiment in which a vehicle seat according to the present invention is applied to a seat of a car is described with reference to the drawings. In the following description, front, rear, left, right, up, and down are defined based on the car provided with the seat. The car may be an electric car having an electric motor and a battery or a car having an internal combustion engine, for example.

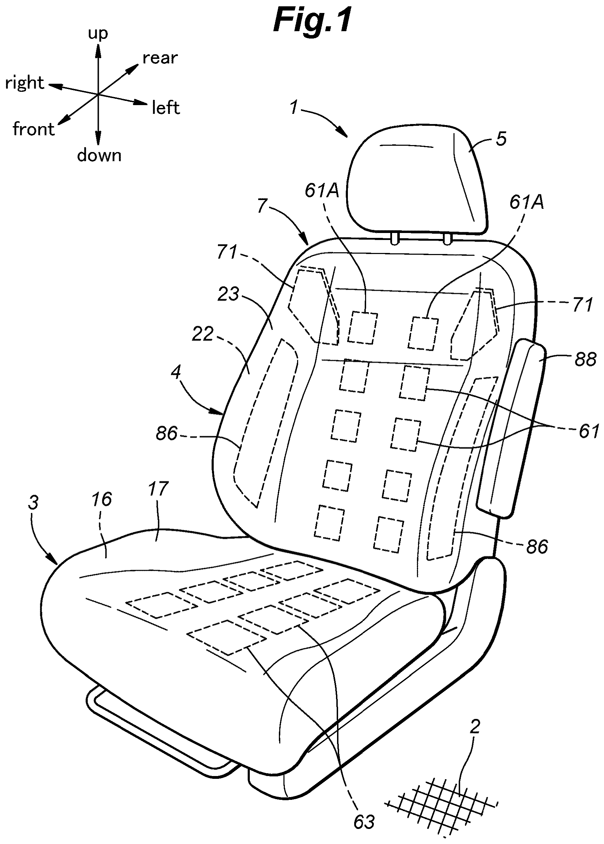

As shown in Figure 1, a seat 1 includes a seat cushion 3 provided on a floor 2, a seatback 4 extending upward from a rear portion of the seat cushion 3, and a headrest 5 joined to an upper portion of the seatback 4. The seatback 4 is pivotably supported by the seat cushion 3. The seat cushion 3, the seatback 4, and the headrest 5 constitute a seat body 7. The seat cushion 3 supports the buttocks of the occupant, and the seatback 4 supports the back of the occupant.

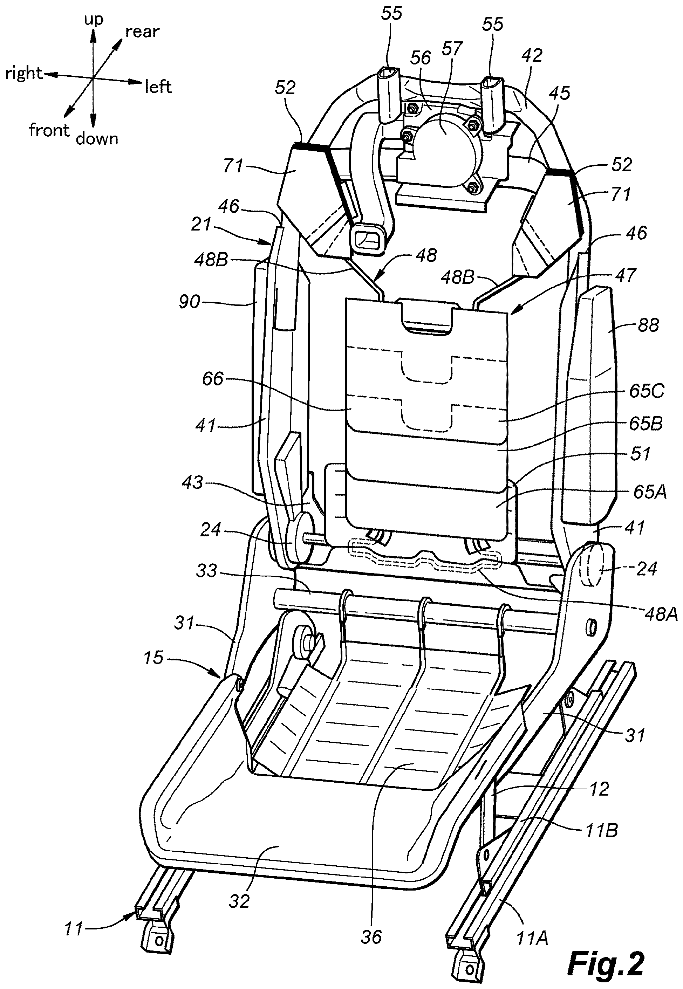

As shown in Figure 2, the seat cushion 3 is provided on the floor 2 via a slide rail 11. The slide rail 11 includes left and right lower rails 11A joined to the floor 2 and left and right upper rails 11B respectively supported on the left and right lower rails 11A to be slidingly movable. The seat cushion 3 is joined to the left and right upper rails 11B. Between the seat cushion 3 and the upper rails 11B, a lift device 12 may be interposed. The lift device 12 supports the seat cushion 3 such that the seat cushion 3 can be lifted and lowered with respect to the left and right upper rails 11B.

The seat cushion 3 includes a seat cushion frame 15 forming a skeleton, a seat cushion pad 16 supported by the seat cushion frame 15, and a skin material 17 covering the surface of the seat cushion pad 16. The seatback 4 includes a seatback frame 21 forming a skeleton, a seatback pad 22 supported by the seatback frame 21, and a skin material 23 covering the surface of the seatback pad 22. The seat cushion frame 15 and the seatback frame 21 are coupled to each other via a reclining device 24.

The seat cushion frame 15 is formed in a quadrilateral frame shape. The seat cushion frame 15 includes left and right seat cushion side members 31 extending in the front-rear direction, a front member 32 extending laterally and joined to the front ends of the left and right seat cushion side members 31, and a rear member 33 extending laterally and joined to the rear ends of the left and right seat cushion side members 31. The front member 32 is preferably a pan frame formed in a plate shape. A buttocks pressure receiving part 36 having flexibility is provided to extend between the front member 32 and the rear member 33. The buttocks pressure receiving part 36 supports the buttocks of the occupant from below.

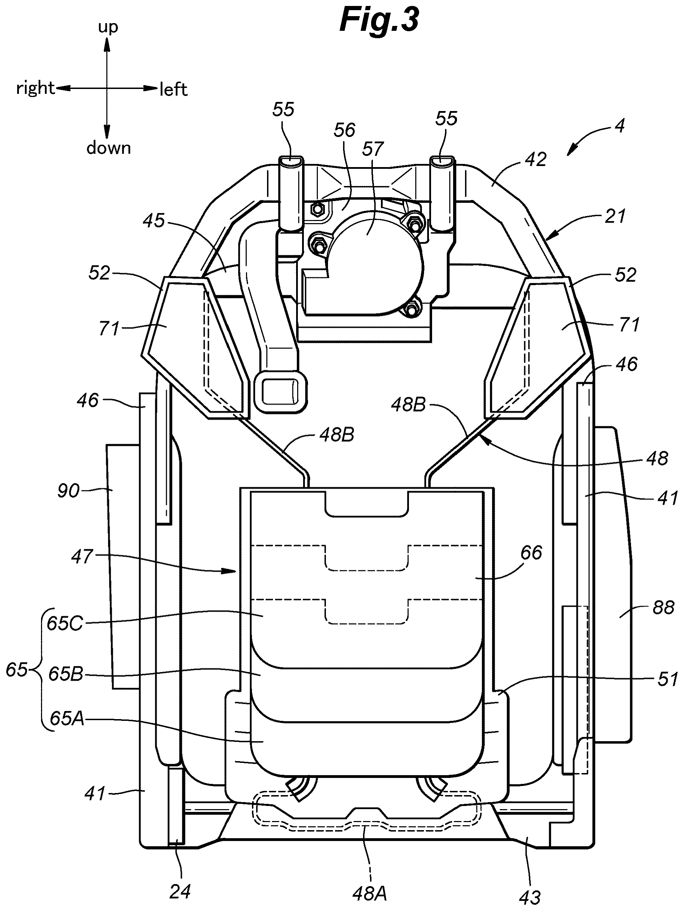

As shown in Figures 2 and 3, the seatback frame 21 is formed in a quadrilateral frame shape. The seatback frame 21 includes left and right seatback side members 41 extending vertically, an upper member 42 extending laterally and joined to the upper ends of the left and right seatback side members 41, and a lower member 43 extending laterally and joined to the lower ends of the left and right seatback side members 41. The left and right seatback side members 41 are formed of sheet metal members. The upper member 42 is formed of a metal pipe. The upper member 42 is curved such that the laterally central part is convex upward. The left and right end portions of the upper member 42 are joined to the upper ends of the corresponding left and right seatback side members 41.

The seatback frame 21 includes a cross member 45 extending laterally below the upper member 42 and joined to the left and right end portions of the upper member 42. The cross member 45 is formed of a sheet metal member. In another embodiment, the left and right end portions of the cross member 45 may be joined to the left and right seatback side members 41. The cross member 45 supports the shoulder portions of the occupant from the rear.

The seatback frame 21 is provided with a back pressure receiving part 47 for supporting the back of the occupant. The back pressure receiving part 47 is provided to extend between the cross member 45 and the lower member 43. The back pressure receiving part 47 includes a wire 48 made of metal and provided to extend between the cross member 45 and the lower member 43, a waist pressure receiving part 51 supported by the wire 48, and left and right shoulder pressure receiving parts 52 supported by the wire 48.

The wire 48 is a thin metal rod having flexibility. The wire 48 includes a wire central part 48A extending in the left-right direction along the lower member 43 and joined to the lower member 43 at multiple points and left and right wire side portions 48B extending upward from the left and right ends of the central part. The upper end portions of the left and right wire side portions 48B are supported by the left and right end portions of the cross member 45 to be displaceable in the up-down direction. Preferably, the cross member 45 is formed with left and right through holes extending in the up-down direction, and the upper end portions of the left and right wire side portions 48B displaceably protrude into the through holes.

The waist pressure receiving part 51 is preferably a plate made of resin. The waist pressure receiving part 51 is joined to lower portions of the left and right wire side portions 48B and has a surface facing forward. The upper portions of the left and right wire side portions 48B extend upward and laterally outward from the waist pressure receiving part 51. The waist pressure receiving part 51 is disposed behind the waist of the occupant and supports the waist of the occupant from the rear.

The left and right shoulder pressure receiving parts 52 are provided on the seatback frame 21 above the waist pressure receiving part 51. The left and right shoulder pressure receiving parts 52 are preferably plates made of resin. The left and right shoulder pressure receiving parts 52 are joined to upper portions of the corresponding wire side portions 48B and each have a surface facing forward. The left and right shoulder pressure receiving parts 52 may be joined to at least one of the cross member 45, the upper member 42, and the left and right seatback side members 41. The left and right shoulder pressure receiving parts 52 are disposed behind the left and right shoulder portions of the occupant and support the left and right shoulder portions of the occupant from the rear.

The upper member 42 is provided with left and right headrest support parts 55 for supporting the headrest 5. Each headrest support part 55 is formed in a tubular shape and extends vertically. A bracket 56 is provided to extend between the upper member 42 and the cross member 45. The bracket 56 is preferably a plate having a surface facing forward. A blower 57 is supported on the front surface of the bracket 56.

The seatback pad 22 is supported by the seatback frame 21, the waist pressure receiving part 51, and the left and right shoulder pressure receiving parts 52. The seat cushion pad 16 is supported by the seat cushion frame 15 and the buttocks pressure receiving part 36.

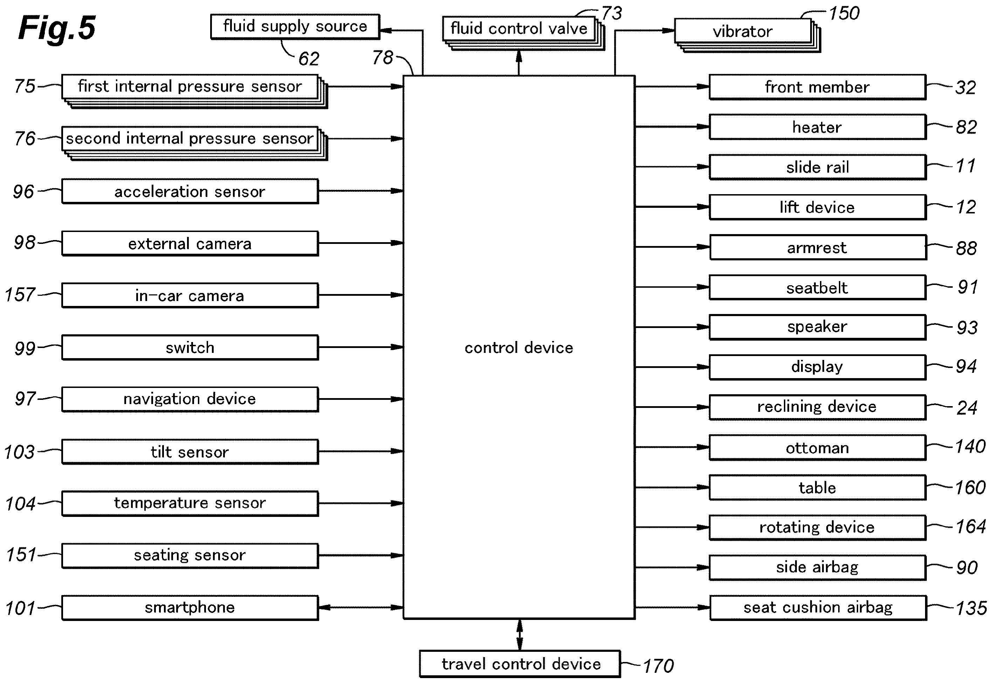

As shown in Figure 1, multiple front fluid bags 61 are provided on the front surface of the seatback pad 22. The multiple front fluid bags 61 are disposed between the seatback pad 22 and the skin material 23. Each front fluid bag 61 is connected to the fluid supply source 62 (see Figure 5) and inflates when receiving a supply of fluid from the fluid supply source 62. The fluid is preferably air, water, or the like, for example. The fluid supply source 62 is preferably a compressor or a pump for press-feeding air or water. The fluid supply source 62 may be provided inside the seat cushion 3 or the seatback 4, or may be provided on the floor 2. For example, the fluid supply source 62 is preferably disposed between the floor 2 and the seat cushion 3. On the front surface of the seatback pad 22, the multiple front fluid bags 61 are arranged vertically. Further, the multiple front fluid bags 61 may be arranged laterally. In the present embodiment, the multiple front fluid bags 61 are arranged in two rows on the left and right. Also, the multiple front fluid bags 61 are vertically arranged at five positions.

Multiple upper fluid bags 63 are provided on the upper surface of the seat cushion pad 16. The multiple upper fluid bags 63 are disposed between the seat cushion pad 16 and the skin material 17. Each upper fluid bag 63 is connected to the fluid supply source 62 and inflates when receiving a supply of fluid from the fluid supply source 62. On the upper surface of the seat cushion pad 16, the multiple upper fluid bags 63 are arranged in the front-rear direction. Further, the multiple upper fluid bags 63 may be arranged laterally. In the present embodiment, the multiple upper fluid bags 63 are arranged in two rows on the left and right. Also, the multiple upper fluid bags 63 are arranged at four positions in the front-rear direction.

As shown in Figures 2 and 3, multiple rear fluid bags 65 are provided between the front surface of the waist pressure receiving part 51 and the rear surface of the seatback pad 22. Each rear fluid bag 65 is connected to the fluid supply source 62 and inflates when receiving a supply of fluid from the fluid supply source 62. The multiple rear fluid bags 65 are arranged vertically. In the present embodiment, the multiple rear fluid bags 65 include a first rear fluid bag 65A, a second rear fluid bag 65B, and a third rear fluid bag 65C in order from the lower side. Each of the first to third rear fluid bags 65A to 65C is joined to the front surface of the waist pressure receiving part 51 at the upper end portion thereof.

The multiple rear fluid bags 65 have overlapping parts 66 that overlap each other as seen in the front-rear direction. Specifically, the lower end portion of the second rear fluid bag 65B is disposed to overlap the front side of the upper end portion of the first rear fluid bag 65A. The lower end portion of the third rear fluid bag 65C is disposed to overlap the front side of the upper end portion of the second rear fluid bag 65B. Each of the first to third rear fluid bags 65A to 65C is configured such that the lower end portion thereof can inflate to a greater extent compared to the upper end portion thereof. When inflated, each of the first to third rear fluid bags 65A to 65C pushes the seatback pad 22 forward and changes the shape of the seatback pad 22.

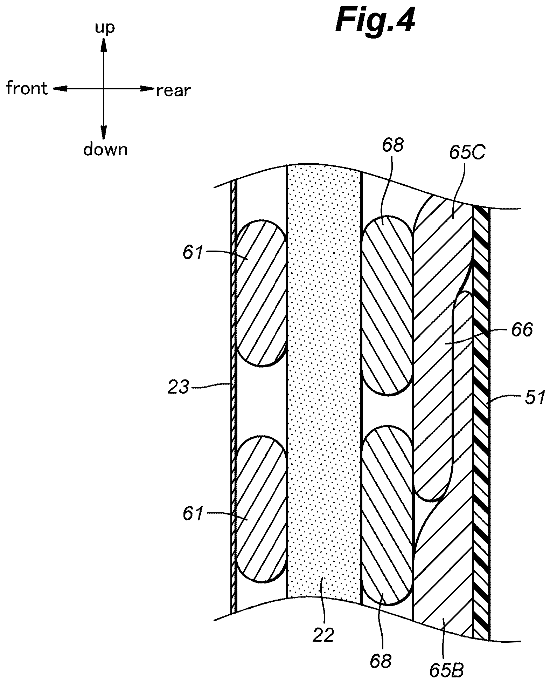

As shown in Figure 4, multiple middle fluid bags 68 may be provided between the rear side of the seatback pad 22 and the multiple rear fluid bags 65. Each middle fluid bag 68 is connected to the fluid supply source 62 and inflates when receiving a supply of fluid from the fluid supply source 62. When inflated, each of the middle fluid bags 68 pushes the seatback pad 22 forward and changes the shape of the seatback pad 22.

As shown in Figures 2 and 3, left and right shoulder fluid bags 71 are provided between the rear surface of the seatback pad 22 and the front surfaces of the left and right shoulder pressure receiving parts 52. Each shoulder fluid bag 71 is connected to the fluid supply source 62 and inflates when receiving a supply of fluid from the fluid supply source 62. When inflated, each of the left and right shoulder fluid bags 71 pushes the seatback pad 22 forward and changes the shape of the seatback pad 22.

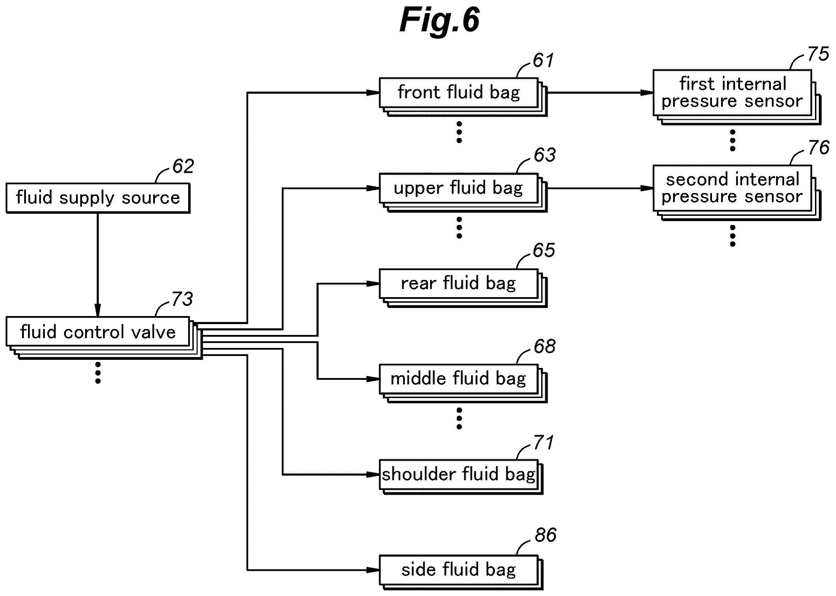

As shown in Figure 6, the multiple tubes respectively connecting the multiple front fluid bags 61, the multiple upper fluid bags 63, the multiple rear fluid bags 65, the multiple middle fluid bags 68, and the left and right shoulder fluid bags 71 to the fluid supply source 62 are respectively provided with multiple fluid control valves 73. Each fluid control valve 73 is switched between a closed state for closing the corresponding fluid bag 61, 63, 65, 68, 71, a supply state for connecting the corresponding fluid bag 61, 63, 65, 68, 71 to the fluid supply source 62, and a release state for releasing the fluid in the corresponding fluid bag 61, 63, 65, 68, 71 to the atmosphere. When the fluid control valve 73 is put in the supply state, the corresponding fluid bag receives a supply of fluid from the fluid supply source 62 and inflates. When the fluid control valve 73 is put in the closed state, the corresponding fluid bag is closed and the fluid is kept in the fluid bag. When the fluid control valve 73 is put in the release state, the fluid in the corresponding fluid bag is emitted to the atmosphere and the fluid bag deflates. The fluid control valve 73 may be a solenoid valve.

The seatback 4 includes multiple first internal pressure sensors 75 for respectively measuring the internal pressures of the multiple front fluid bags 61. The multiple first internal pressure sensors 75 may be provided in the corresponding front fluid bags 61 or may be provided in the tubes connected to the corresponding front fluid bags 61.

The seat cushion 3 includes multiple second internal pressure sensors 76 for respectively measuring the internal pressures of the multiple upper fluid bags 63. The multiple second internal pressure sensors 76 may be provided in the corresponding upper fluid bags 63 or may be provided in the tubes connected to the corresponding upper fluid bags 63.

As shown in Figure 5, the fluid supply source 62, the multiple fluid control valves 73, the multiple first internal pressure sensors 75, and the multiple second internal pressure sensors 76 are connected to the control device 78. The control device 78 is an electronic control unit including a processor and a memory connected to the processor to be capable of communicating therewith. The processor preferably includes, as a core, at least one of a CPU (Central Processing Unit), a GPU (Graphics Processing Unit), a RISC (Reduced Instruction Set Computer), for example. The memory preferably includes at least one of a volatile memory and a non-volatile memory. The volatile memory may be a DRAM (Dynamic Random Access Memory) or a SRAM (Static Random Access Memory), for example. The non-volatile memory may be an SSD (Solid State Drive), a flash memory, a magnetic disk storage device, or an optical disk storage device. At least a part of the control device 78 may be realized by hardware such as an LSI, an ASIC, an FPGA, etc. or may be realized by a combination of software and hardware. The processor realizes various applications by executing programs stored in the memory. The programs may be stored in the memory, or may be stored in a removable storage medium such as a DVD, a CD-ROM, or the like to be installed in the memory when the storage medium is read by a reading device. Also, the programs may be downloaded and installed in the memory via a communication network such as the internet or the like. The control device 78 may be constituted of a single piece of hardware or may be constituted of multiple pieces of hardware capable of communicating with each other.

The control device 78 controls the driving of the fluid supply source 62 and also controls the multiple fluid control valves 73. Further, the control device 78 functions as a posture determination unit for determining the posture of the occupant based on the internal pressures of the multiple front fluid bags 61.

The control device 78 executes the posture determination control at a predetermined timing. In the posture determination control, the control device 78 controls the fluid control valves 73 for the multiple front fluid bags 61 to control the fluid supplied to the front fluid bags 61, acquires the internal pressures of the multiple front fluid bags 61 based on the signals from the multiple first internal pressure sensors 75, and determines the posture of the occupant seated on the seat 1 based on the internal pressures of the multiple front fluid bags 61.

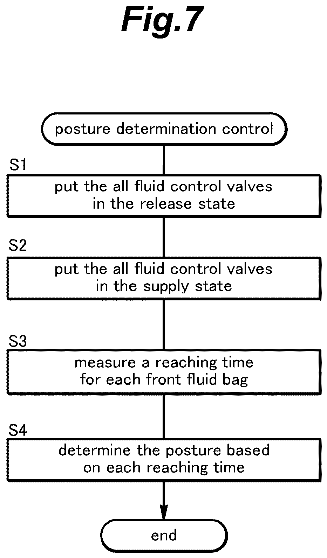

For example, as shown in Figure 7, in the posture determination control, the control device 78 first puts the all fluid control valves 73 corresponding to the all front fluid bags 61 in the release state (S1). Thereby, the all front fluid bags 61 are brought into a depressurized (deflated) initial state. Next, the control device 78 puts the all fluid control valves 73 corresponding to the all front fluid bags 61 in the supply state (S2). Thereby, the fluid starts being supplied to the all front fluid bags 61. Thereafter, the control device 78 measures, for each of the front fluid bags 61, a time until the internal pressure reaches a predetermined threshold, as a reaching time (S3). Then, the control device 78 determines the posture of the occupant based on the reaching time for each of the front fluid bags 61 (S4).

A front fluid bag 61 with a short reaching time receives a larger pressure from the occupant than another front fluid bag 61 with a long reaching time. Namely, the distribution of pressure applied from the occupant to the seatback 4 can be inferred from the reaching times. For example, it is preferable to determine that the posture of the occupant is hunched in a case where the reaching time for the front fluid bags 61 on the lower side is shorter than the reaching time for the front fluid bags 61 on the upper side. Conversely, it is preferable to determine that the posture of the occupant is lordotic (swaybacked) in a case where the reaching time for the front fluid bags 61 on the lower side is longer than the reaching time for the front fluid bags 61 on the upper side. Also, it is preferable to determine that the posture of the occupant is proper in a case where the difference between the reaching time for the front fluid bags 61 on the lower side and the reaching time for the front fluid bags 61 on the upper side is less than or equal to a predetermined value. In this way, the control device 78 preferably determines the posture of the occupant based on the difference between the reaching times in the up-down direction.

Also, it is preferable to determine that the posture of the occupant is tilted to the right in a case where the reaching time for the front fluid bags on the right side is shorter than the reaching time for the front fluid bags on the left side. It is preferable to determine that the posture of the occupant is tilted to the left in a case where the reaching time for the front fluid bags on the left side is shorter than the reaching time for the front fluid bags on the right side. It is preferable to determine that the posture of the occupant is neutral (proper) in the left-right direction in a case where the difference between the reaching time for the front fluid bags on the right side and the reaching time for the front fluid bags on the left side is less than or equal to a predetermined value. Preferably, the control device 78 stores the relationship between the reaching time corresponding to each front fluid bag 61 and the posture as a map in advance, and determines the posture based on the reaching time corresponding to each front fluid bag 61 and the map. In this way, the control device 78 preferably determines the posture of the occupant based on the difference between the reaching times in the left-right direction.

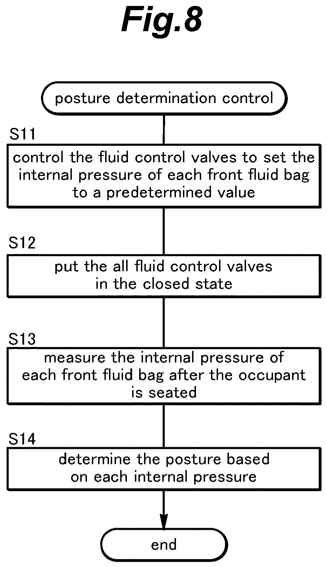

In the method in which the all front fluid bags 61 are put in the initial state (deflated state) before the occupant is seated, and after the occupant is seated, the fluid is supplied to the all front fluid bags 61 and the reaching time required until the predetermined internal pressure is reached is measured as shown in Figure 7, it takes a relatively long time to determine the posture. Therefore, to perform faster posture determination, another example of the posture determination control as shown in Figure 8 may be used. As shown in Figure 8, the control device 78 controls the fluid control valves 73 such that the internal pressures of the all front fluid bags 61 become a predetermined value before the occupant is seated on the seat 1 (S11). Subsequently, the control device 78 puts each fluid control valve 73 in the closed state (S12). Thereafter, the control device 78 measures the internal pressure of each front fluid bag 61 after the occupant is seated on the seat 1 (S13). Whether the occupant has been seated is preferably detected based on a change in the internal pressure of each front fluid bag 61. Then, the control device 78 determines the posture of the occupant based on the internal pressure of each front fluid bag 61 (S14). For example, it is preferable to determine that the posture of the occupant is hunched in a case where the internal pressure of the front fluid bags 61 on the lower side is higher than the internal pressure of the front fluid bags 61 on the upper side. Also, it is preferable to determine that the posture of the occupant is lordotic in a case where the internal pressure of the front fluid bags 61 on the upper side is higher than the internal pressure of the front fluid bags 61 on the lower side. Further, it is preferable to determine that the posture of the occupant is proper in a case where the difference between the internal pressure of the front fluid bags 61 on the lower side and the internal pressure of the front fluid bags 61 on the upper side is less than or equal to a predetermined value. The control device 78 preferably determines the posture of the occupant based on a map defining the relationship between the internal pressure distribution of the front fluid bags 61 and the posture of the occupant.

Preferably, the control device 78 puts the all rear fluid bags 65 and the all middle fluid bags 68 in the initial state (deflated state) by controlling the fluid control valves 73 before measuring the internal pressures of the multiple front fluid bags 61. Also, in a case where the multiple rear fluid bags 65 and the multiple middle fluid bags 68 are filled with the fluid, the control device 78 may correct the internal pressures of the multiple front fluid bags 61 based on the internal pressures of the multiple rear fluid bags 65 and the multiple middle fluid bags 68.

In another embodiment, internal pressure sensors for measuring the internal pressures of the multiple rear fluid bags 65 may be provided. In this case, the control device 78 may determine the posture of the occupant based on the internal pressures of the multiple rear fluid bags 65 instead of the multiple front fluid bags 61. Also, the multiple front fluid bags 61 and the multiple middle fluid bags 68 may be used for the purpose of massage or posture correction.

As seen from the front, upper end fluid bags 61A, which are disposed the highest among the multiple front fluid bags 61, are disposed between the left and right shoulder pressure receiving parts 52. In the present embodiment, two upper end fluid bags 61A are disposed between the left and right shoulder pressure receiving parts 52. According to this aspect, the upper end fluid bags 61A are disposed in a relatively high portion of the seatback 4. Regarding the upper body of the occupant seated on the seat 1, an upper portion including the shoulders tends to move more easily depending on the posture than a lower portion including the waist. Therefore, by detecting the internal pressures of the upper end fluid bags 61A, the control device 78 can accurately determine the posture of the occupant.

As seen from the front, the upper end fluid bags 61A are disposed above the overlapping part 66. As seen from the front, the upper end fluid bags 61A are disposed above the overlapping part 66 between the second rear fluid bag 65B and the third rear fluid bag 65C. According to this aspect, the upper end fluid bags 61A can be disposed at a relatively high position in the seatback 4. As a result, the posture of the occupant can be determined accurately with the upper end fluid bags 61A. Also, as seen from the front, the upper end fluid bags 61A are disposed above the upper edge of the waist pressure receiving part 51. At least one of the multiple front fluid bags 61 may overlap the overlapping part 66 as seen from the front.

In the present embodiment, as seen from the front, the upper end fluid bags 61A are disposed so as not to overlap the upper portions of the left and right wire side portions 48B which function as coupling parts that couple the waist pressure receiving part 51 to the left and right shoulder pressure receiving parts 52. Also, preferably, the upper end fluid bags 61A are disposed on the inner side of the upper portions of the left and right wire side portions 48B as seen from the front. In another embodiment, as seen from the front, the upper end fluid bags 61A may overlap the upper portions of the left and right wire side portions 48B which function as coupling parts that couple the waist pressure receiving part 51 to the left and right shoulder pressure receiving parts 52.

Each of the multiple rear fluid bags 65 is preferably disposed forward of the blower 57. Each of the left and right upper end fluid bags 61A is preferably disposed higher than the joining parts 46 of the left and right side members with the upper member 42. Also, each of the left and right upper end fluid bags 61A may be disposed lower than the joining parts 46 of the left and right side members with the upper member 42.

Preferably, the lower end of each of the left and right upper end fluid bags 61A is disposed above the lower end of each of the left and right shoulder pressure receiving parts 52. Also, the upper end of each of the left and right upper end fluid bags 61A is disposed below the upper end of each of the left and right shoulder pressure receiving parts 52. According to these aspects, the upper end fluid bags 61A can be disposed at a relatively high position in the seatback 4. As a result, the posture of the occupant can be determined accurately with the upper end fluid bags 61A.

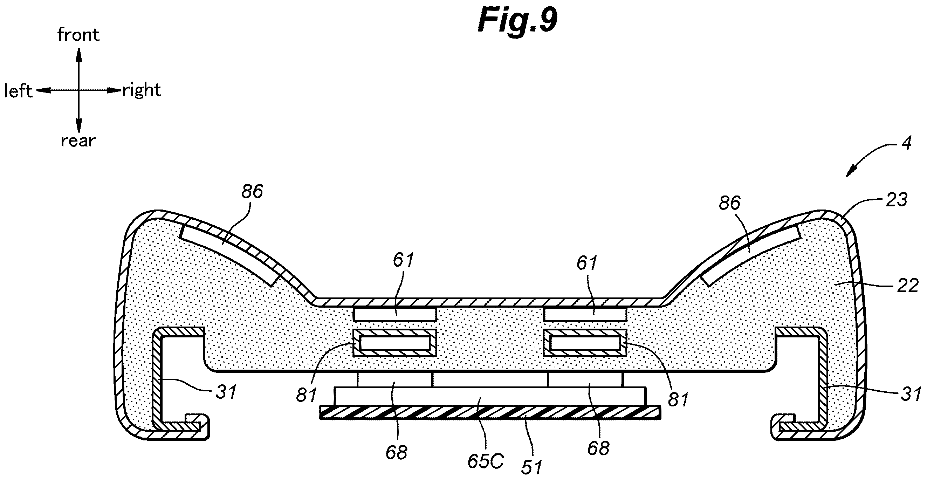

As shown in Figure 9, air pipes 81 that form air passages may be provided in the seatback pad 22. The air pipes 81 are preferably made of a material harder than the seatback pad 22. For example, the seatback pad 22 may be made of urethane foam, and the air pipes 81 may be made of urethane foam harder than the seatback pad 22. Also, the air pipes 81 may be made of resin such as polyethylene. Preferably, the multiple front fluid bags 61 are disposed at positions overlapping the air pipes 81 as seen from the front. According to this aspect, since the air pipes 81 support the multiple front fluid bags 61 from the rear, the multiple front fluid bags 61 can properly receive the load from the occupant.

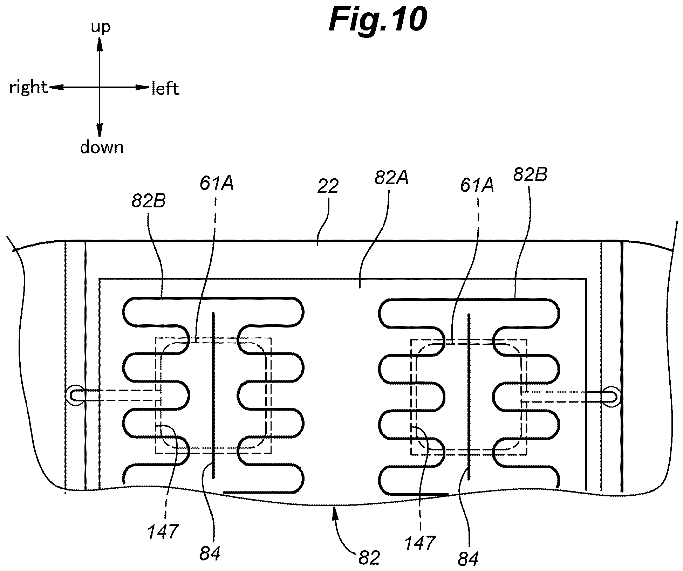

As shown in Figure 10, a heater 82 in a sheet shape may be provided between the front surface of the seatback pad 22 and the skin material 23. The heater 82 includes a base fabric 82A made of nonwoven fabric or the like and an electric heating wire 82B provided on the surface of the base fabric 82A. The multiple front fluid bags 61 are preferably provided between the front surface of the seatback pad 22 and the base fabric 82A of the heater 82. In this case, the base fabric 82A preferably has multiple slits 84 in parts facing the multiple front fluid bags 61. With the slits 84 being opened, the front fluid bags 61 can inflate without being obstructed by the base fabric 82A.

When determining the posture of the occupant, there is a problem that if the seating position of the occupant, specifically, the position of the buttocks is deviated to the left or right or forward or backward from the proper position, the accuracy of the posture determination is lowered. The seating position of the occupant may also change due to turning, acceleration, or deceleration of the car. To solve this problem, the seat 1 according to the present embodiment has first posture correction means provided in the left and right side portions of the seatback 4. The first posture correction means preferably consists of the left and right shoulder fluid bags 71. When the left and right shoulder fluid bags 71 are inflated, the occupant is pushed toward the center of the seatback 4, and the seating position of the occupant in the left-right direction is corrected to the proper position.

As shown in Figures 1 and 9, the first posture correction means may the left and right side fluid bags 86 provided in the left and right side portions of the seatback 4. Preferably, the left and right side fluid bags 86 are provided below the left and right shoulder fluid bags 71 and extend vertically. The left and right side fluid bags 86 are preferably provided between the front surface of the seatback pad 22 and the skin material 23 or between the seatback pad 22 and the left and right seatback side members 41. When inflated, the left and right side fluid bags 86 causes the bank parts of the front surface of the seatback 4 to protrude forward. Also, the first posture correction means may be armrests 88 provided on the left and right side portions of the seatback 4.

The seat 1 may include a second correction device for correcting the seating position of the occupant in the front-rear direction. The second correction device preferably consists of a seatbelt 91 provided on the seat 1 (see Figure 5). With the seatbelt 91 fastened, the seating position of the occupant in the front-rear direction is corrected to the proper position.

The control device 78 preferably executes the posture determination control after the first posture correction means is activated and the second posture correction means is fastened.

Before executing the posture determination control, the control device 78 may notify the occupant that the posture determination control will be executed. As shown in Figure 5, a speaker 93 and a display 94 are preferably connected to the control device 78. The display 94 is preferably a touch panel display. The notification is preferably made by a voice from the speaker 93 or an image displayed on the display 94. Also, the control device 78 may determine the deviation of the seating position of the occupant in the left-right direction based on the internal pressures of the multiple front fluid bags 61. And, the control device 78 may notify the occupant to sit in the proper position on the seat 1 when it determines that the seating position of the occupant is deviated in the left-right direction.

When the car provided with the seat 1 is traveling, there is a problem that the posture of the occupant may fluctuate depending on the acceleration applied to the car, and the accuracy of the posture determination may be lowered. For example, the posture of the occupant changes due to turning, acceleration, or deceleration of the car. To solve such a problem, in the seat 1 according to the present embodiment, the control device 78 executes posture determination control when the car is traveling stably. As shown in Figure 5, the control device 78 is connected to an acceleration sensor 96 of the car and acquires an acceleration of the car. The acceleration sensor 96 preferably detects the forward-backward acceleration, lateral acceleration, and vertical acceleration of the car. Preferably, When the absolute value of each of the forward-backward acceleration, lateral acceleration, and vertical acceleration is less than or equal to a predetermined determination value, the control device 78 determines that the car is traveling stably and executes the posture determination control. In another embodiment, the control device 78 may determine that the car is traveling stably and execute the posture determination control when the absolute value of the yaw rate of the car is less than or equal to a predetermined determination value.

As shown in Figure 5, the control device 78 may be connected to a navigation device 97, acquire the shape of the road on which the car is traveling based on the map information in the navigation device 97 and the position of the car, and determine whether the car is traveling stably based on the shape of the road on which the car is traveling. For example, it may be determined that the car is traveling stably when the curvature of the road is less than or equal to a predetermined determination value. Also, the control device 78 may be connected to an external camera 98 configured to capture an image of an area in front of the car, acquire the shape of the road on which the car is traveling based on the image captured by the external camera 98, and determine whether the car is traveling stably based on the shape of the road on which the car is traveling.

When the control device 78 determines that the car is traveling stably, the control device 78 may ask the occupant on whether to execute the posture determination control with a voice from the speaker 93 or an image displayed on the display 94.

The control device 78 may start the posture determination control based on a signal from a switch 99 operated by the occupant. Preferably, when the control device 78 receives a signal from the switch 99, the control device 78 determines that the car is traveling stably and starts the posture determination control. The switch 99 may be a mechanical switch provided in the car or on the seat 1, or a switch configured on the display 94 or a touch panel display of a smartphone 101. The smartphone 101 is connected to the control device 78 to be capable of communicating therewith.

As shown in Figure 5, the car is preferably provided with a tilt sensor 103 for detecting the tilt of the car and a temperature sensor 104 for detecting the temperature inside the car cabin. The control device 78 is connected to the tilt sensor 103 and the temperature sensor 104. The control device 78 preferably corrects the internal pressures of the multiple front fluid bags 61 based on at least one of the tilt of the car and the temperature inside the car cabin. Also, the control device 78 preferably corrects the posture of the occupant that is determined based on the internal pressures of the multiple front fluid bags 61 based on at least one of the tilt of the car and the temperature inside the car cabin. For example, preferably, the control device 78 sets a correction coefficient for each of the front fluid bags 61 based on the tilt of the car and corrects the internal pressure value of each of the front fluid bags 61 by multiplying the measured internal pressure by each correction coefficient.

The control device 78 may correct the internal pressures of the multiple front fluid bags 61 based on a vibration state of the car. Also, the control device 78 may correct the posture of the occupant that is determined based on the internal pressures of the multiple front fluid bags 61 based on the vibration state of the car. Preferably, the control device 78 acquires the vibration of the car based on a signal from the acceleration sensor 96.

The control device 78 may set the correction coefficient of each of the front fluid bags 61 based on at least one of the forward-backward acceleration, lateral acceleration, and vertical acceleration and correct the internal pressure value of each of the front fluid bags 61 by multiplying the measured internal pressure by each correction coefficient.

The control device 78 may set the correction coefficient of each of the front fluid bags 61 based on an outside air pressure and correct the internal pressure of each of the front fluid bags 61 by multiplying the measured internal pressure by each correction coefficient. The outside air pressure is preferably acquired by an outside air pressure sensor.

When the car collides, it is preferable that the occupant can easily take a posture preparing for the collision. Accordingly, it is preferable that the posture determination control and the posture correction process are stopped. In the present embodiment, preferably, the control device 78 estimates the degree of risk of collision based on the image of the area in front of the car acquired by the external camera 98, and when the degree of risk of collision is greater than or equal to a predetermined determination value, stops the posture determination control and the posture correction process. Specifically, the control device 78 preferably puts the all fluid control valves 73 in the release state to make the all fluid bags return to the initial state.

To improve the accuracy of the posture determination, the control device 78 may change the timings at which the fluid is supplied to the respective front fluid bags 61 instead of supplying the fluid to the all front fluid bags 61 simultaneously. For example, the control device 78 may supply the fluid to the multiple front fluid bags 61 in order from the lower side. In the seat 1 according to the present embodiment, since two left and right rows of front fluid bag 61 are provided, the control device 78 preferably supplies the fluid to the two left and right rows of front fluid bags 61 in order from the lower side. The lower portion of the seatback 4 receives a larger pressure from the occupant than the upper portion. Therefore, by inflating the front fluid bags 61 from those disposed on the lower side, the posture of the occupant is stabilized. Thereby, the control device 78 can properly determine the posture of the occupant.

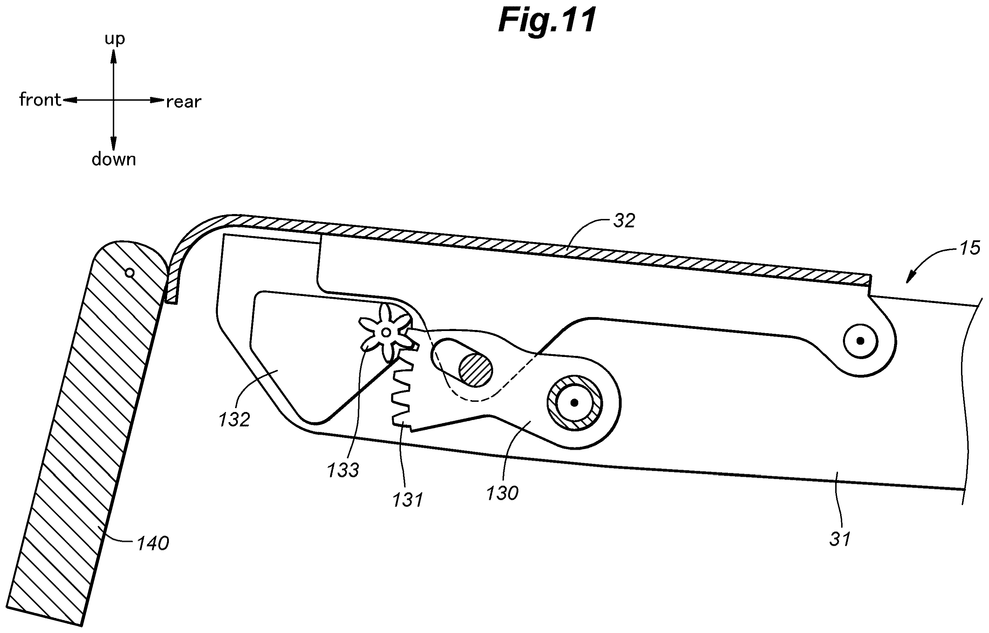

As shown in Figure 11, the front member 32 may be provided to be pivotable relative to the left and right seat cushion side members 31. The rear end of the front member 32 is supported by the left and right seat cushion side members 31 to be pivotable about an axis extending in the left-right direction. The front member 32 pivots between a low position in which the front member 32 extends in parallel with the left and right seat cushion side members 31 and a high position in which the front end of the front member 32 is positioned above the front ends of the left and right seat cushion side members 31.

A front portion of the front member 32 is connected to the left and right cushion side members via left and right links 130. One end of each link 130 is pivotably supported by the corresponding cushion side member. One link 130 is provided with a sector gear 131. The sector gear 131 meshes with a pinion 133 joined to the output shaft of a front member actuator 132 for driving the front member 32. When the pinion 133 rotates due to driving of the front member actuator 132, the link 130 pivots and the front member 32 pivots.

A seat cushion airbag 135 is provided on the upper surface of the front member 32. The seat cushion airbag 135 inflates at the time of collision of the car and causes the front portion of the seat cushion 3 to protrude upward. Thereby, a submarine phenomenon can be suppressed. The submarine phenomenon refers to a phenomenon in that, due to frontal collision of the car, the occupant seated on the seat 1 slides forward from under the seatbelt 91. The seat cushion airbag 135 includes an airbag and an inflator for inflating the airbag.

An ottoman 140 is pivotably supported at the front end of the front member 32. The ottoman 140 includes an ottoman actuator which is an electric motor, for example. The ottoman actuator is controlled by the control device 78 to change the angle of the ottoman 140 relative to the front member 32.

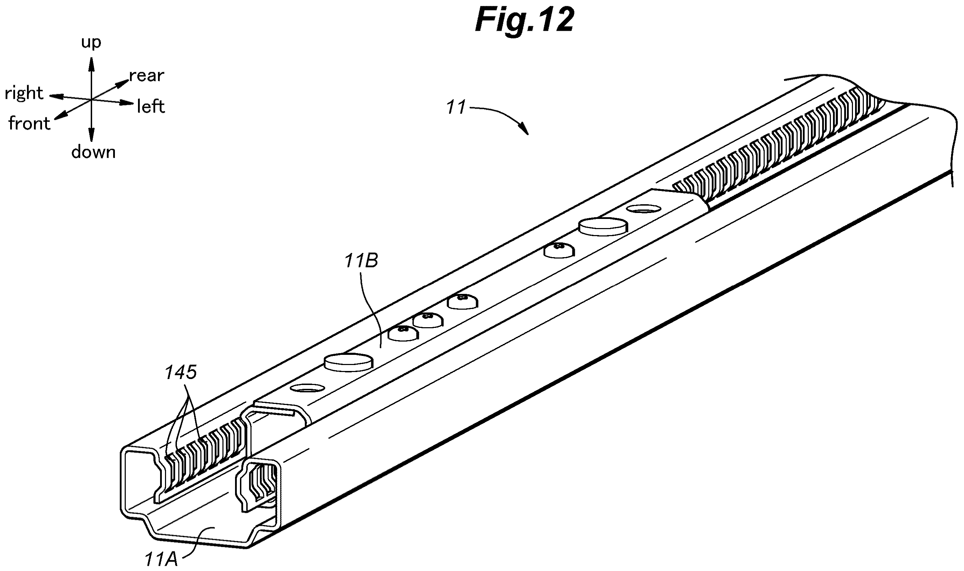

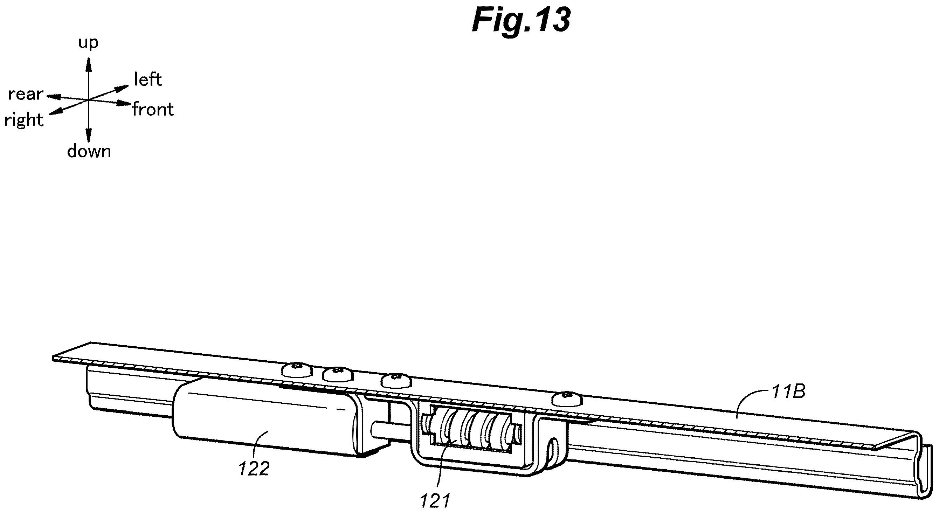

As shown in Figure 12, the lower rail 11A may have multiple locking holes 145 arranged in the front-rear direction. As shown in Figure 13, the upper rail 11B may include a screw shaft 121 that is pivotably supported and an electric motor 122 for rotating the screw shaft 121. The screw shaft 121 meshes with some of the multiple locking holes 145 and moves forward and backward relative to the locking holes 145 when rotated. Namely, due to rotation of the screw shaft 121, the upper rail 11B moves forward and backward relative to the lower rail 11A. The lower rail 11A may be a long rail greater than or equal to two meters, for example, and may be commonly used by front and rear seats 1.

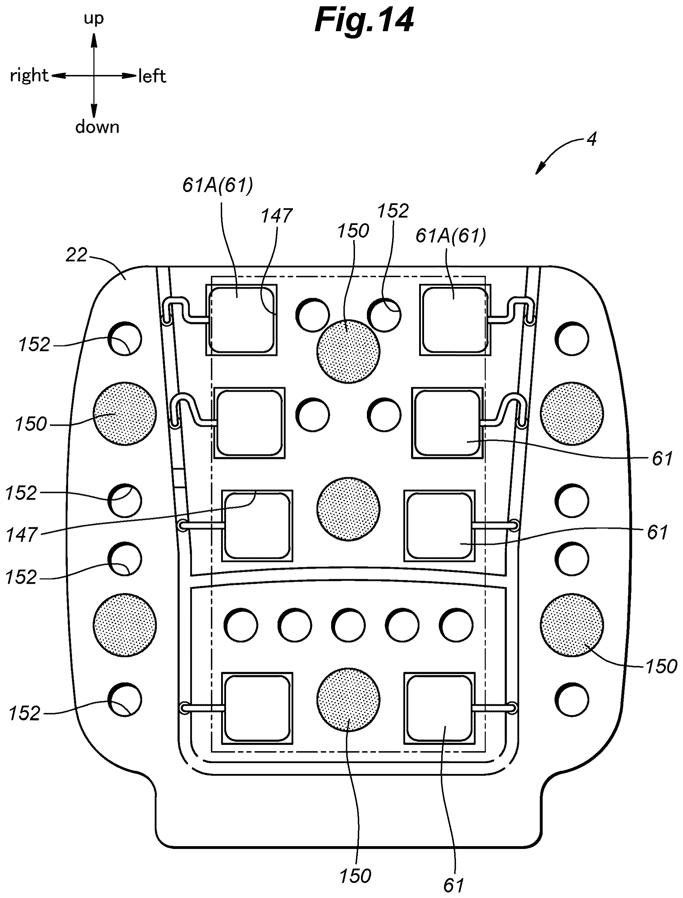

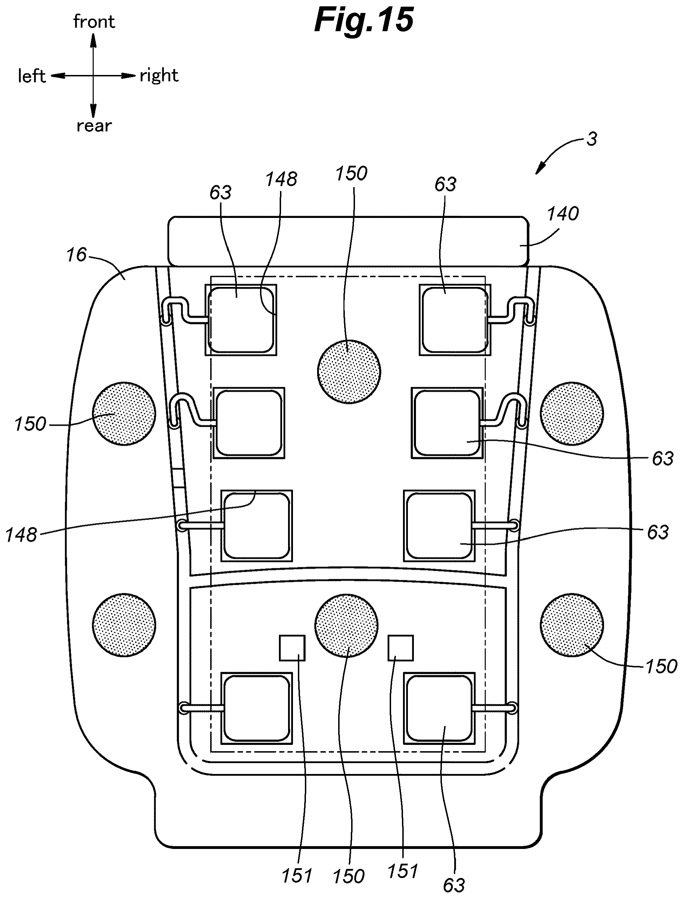

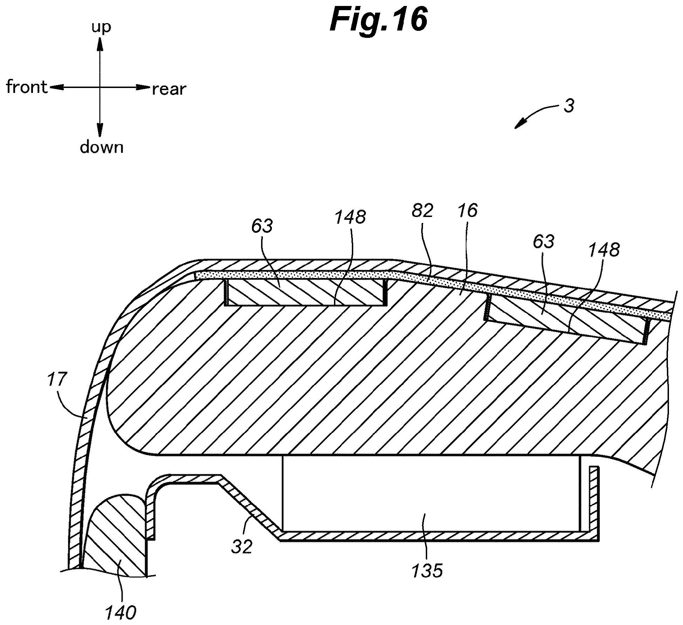

As shown in Figure 14, the front surface of the seatback pad 22 is preferably provided with multiple recesses 147 for respectively receiving the multiple front fluid bags 61. When each front fluid bag 61 is in the initial state (deflated state), the front surface of each front fluid bag 61 is preferably disposed to be flush with the front surface of the seatback pad 22. As shown in Figures 15 and 16, the upper surface of the seat cushion pad 16 may be provided with multiple recesses 148 for respectively receiving the multiple upper fluid bags 63. When each upper fluid bag 63 is in the initial state (deflated state), the upper surface of each upper fluid bag 63 is preferably disposed to be flush with the upper surface of the seat cushion pad 16.

As shown in Figures 14 and 15, the upper surface of the seat cushion pad 16 and the front surface of the seatback pad 22 are preferably provided with multiple vibrators 150. The multiple vibrators 150 are preferably arranged to be spaced from each other. The multiple vibrators 150 are preferably disposed on a front central part, a front left part, a front right part, a rear central part, a rear left part, and a rear right part of the upper surface of the seat cushion pad 16, for example. The multiple vibrators 150 are preferably disposed in positions not overlapping the multiple upper fluid bags 63. Also, the upper surface of the seat cushion pad 16 is preferably provided with at least one seating sensor 151. The seating sensor 151 is a membrane switch, for example, and receives a load from the occupant and outputs a signal to the control device 78.

The multiple vibrators 150 are preferably disposed on an upper central part, an upper left part, an upper right part, a central part, a lower central part, a lower left part, and a lower right part of the front surface of the seatback pad 22, for example. Also, multiple vent holes 152 open in the front surface of the seatback pad 22. The multiple vent holes 152 are connected to the blower 57 via the air pipes 81.

The upper surface of the seat cushion pad 16 and the front surface of the seatback pad 22 are preferably provided with multiple recesses for respectively receiving the multiple vibrators 150. The multiple vibrators 150 are preferably configured to provide a notification or warning to the occupant or to be linked to the music in the car.

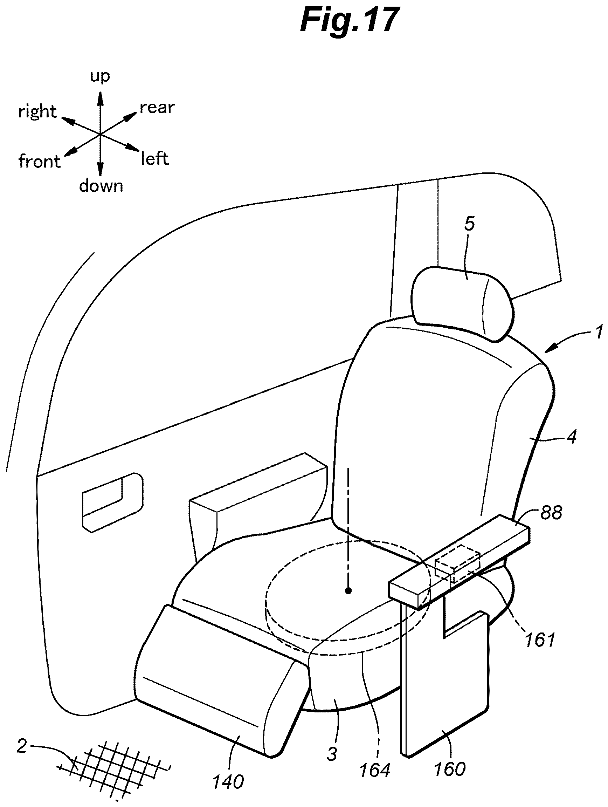

As shown in Figure 17, a table 160 is displaceably supported on the armrest 88 of the seat 1. The table 160 is displaceable between a stowed state and a use state. In the stowed state, the table 160 preferably extends downward from the armrest 88. In the use state, the table 160 extends from the armrest 88 to above the seat cushion 3 so that the surfaces thereof face up and down. The armrest 88 is provided with a table actuator 161 for driving the table 160 between the stowed position and the use position.

The reclining device 24 includes an actuator and changes the angle of the seatback 4 relative to the seat cushion 3, namely, the reclining angle.

As shown in Figure 17, a rotating device 164 for supporting the seat cushion 3 to be rotatable about a vertical axis with respect to the lift device 12 may be provided between the lift device 12 and the seat cushion 3. The rotating device 164 includes a lower plate joined to an upper portion of the lift device 12, an upper plate supported by the lower plate to be rotatable about the vertical axis, and an actuator for causing the upper plate to rotate relative to the lower plate. The upper plate is joined to the seat cushion 3. The rotating device 164 may be provided between the lift device 12 and the left and right upper rails 11B. In this case, the base plate is joined to the left and right upper rails 11B, and the upper plate is joined to a lower portion of the lift device 12.

The control device 78 is connected to the lift device 12, the front member 32 (the front member actuator 132), the ottoman 140, the reclining device 24, the table 160 (the table actuator 161), the multiple vibrators 150, and the rotating device 164, and controls them. The control device 78 may control them independently or may control them cooperatively. For example, preferably, the control device 78 controls the lift device 12 to lower the height of the seat cushion 3 and simultaneously controls the front member 32 (the front member actuator 132) to move the front member 32 to a high position, and further controls the ottoman 140 to cause the ottoman 140 to pivot forward. Also, simultaneously, the control device 78 may control the reclining device 24 to tilt the seatback 4 rearward.

By controlling the fluid supply source 62 and the multiple fluid control valves 73, the control device 78 causes the multiple front fluid bags 61, the multiple upper fluid bags 63, the multiple rear fluid bags 65, the multiple middle fluid bags 68, the left and right shoulder fluid bags 71, and the left and right side fluid bags 86 to expand and contract. The control device 78 controls the fluid supply source 62 and the multiple fluid control valves 73 according to massage control for massaging the occupant, correction control for correcting the posture of the occupant, and posture determination control for determining the posture of the occupant. In the massage control, each fluid bag repeatedly inflates and deflates to massage the occupant. In the correction control, with inflation of predetermined fluid bags, the shape of the seat cushion 3 and the seatback 4 is changed, and the posture of the occupant seated on the seat 1 is corrected.

It is preferable that the massage control, the correction control, and the posture determination control are executed at appropriate timings. Therefore, the control device 78 preferably executes or prohibits the massage control, the correction control, and the posture determination control based on an environment state. According to this aspect, execution of the massage control, the correction control, and the posture determination control in an inappropriate environment is prevented.

Here, the environment state refers to a state of the surroundings that can affect the occupant, and includes at least one of the state of the car (vehicle), the environment state inside the car, the environment state outside the car, the state of the occupant, and the state of the seat 1, for example.

The state of the car includes which of a traveling state, a stopped state, a parked state, and a charging state the car is in, a forward-backward speed, a lateral speed, a forward-backward acceleration, a lateral acceleration, and a vertical acceleration of the car, etc. The determination of the traveling state, the stopped state, or the parked state of the car is preferably performed based on the vehicle speed and shift position. The determination of the charging state is preferably performed based on the connection state of the charging plug or the electric current flowing to the battery. The charging state includes a state in which battery replacement work is being performed. In this case, whether battery replacement work is being performed may be preferably determined based on the connection state of the battery.

The environment state inside the car includes the number of occupants, a conversation state between occupants, a use state of an audio system, a use state of a television set, an operation state of an air conditioner, a car interior temperature, a car interior humidity, and the like. The number of occupants is preferably determined based on the image captured by an in-car camera 157. The conversation state between occupants is preferably acquired with a microphone. The air conditioner includes an air conditioner and the blower 57 provided in the car.

The state of the occupant includes the fatigue level, alertness level, health condition, posture, etc. of the occupant. The fatigue level, alertness level, health condition, and posture of the occupant are preferably acquired based on the image of the occupant captured by the in-car camera 157. The health condition of the occupant may be acquired based on a vital sensor such as a heart rate sensor or the like. Also, the posture is preferably acquired by the aforementioned posture determination control.

The state of the seat 1 includes the reclining angle, the height of the lift device 12, the height of the front member 32, the ottoman angle, the front-rear position of the seat 1, etc. These are preferably acquired by various sensors provided in the seat 1.

The control device 78 preferably executes or enables execution of the posture determination control and the correction control when the traveling state of the car is stable. Here, when the traveling state of the car is stable is preferably when the car is traveling at a constant speed, when the vehicle speed fluctuation is small, or when the vehicle speed is lower than or equal to a predetermined value (for example, lower than or equal to 50 km/h), for example. According to this aspect, the accuracy of the posture determination control improves. Also, the effect of the correction control can be effectively applied to the occupant.

The control device 78 preferably limits or prohibits the posture determination control and the correction control when the traveling state of the car is not stable (when unstable). Here, when the traveling state of the car is not stable is preferably when the absolute values of the forward-backward acceleration and the lateral acceleration are greater than or equal to respective determination values, when the vehicle speed is higher than or equal to a predetermined value (for example, higher than or equal to 60 km/h), or the like. Here, limiting the posture determination control and the correction control includes reducing the number of controls or reducing the amount of operation of each fluid bag. According to this aspect, it is possible to limit or prohibit the posture determination control when the state is not appropriate for the posture determination control. Also, it is possible to limit or prohibit when the correction control the state is not appropriate for the correction control.

Preferably, the control device 78 executes the posture determination control or the correction control when the vehicle speed is low (for example, lower than 30 km/h), limits the posture determination control and the correction control when the vehicle speed is medium (for example, higher than or equal to 30 km/h and lower than 60 km/h), and prohibits the posture determination control and the correction control when the vehicle speed is high (for example, higher than or equal to 60 km/h).

The control device 78 preferably executes or enables execution of the posture determination control and the correction control when the car is in the stopped state or the parked state. According to this aspect, the accuracy of the posture determination control improves. Also, the effect of the correction control can be effectively applied to the occupant.

The control device 78 preferably limits or prohibits the massage control, the posture determination control, and the correction control when the car is moving backward. Also, the control device 78 preferably limits or prohibits the posture determination control and the correction control when the car is moving backward movement. Whether the car is moving backward is preferably determined based on the shift position, for example.

The control device 78 preferably executes or enables execution of the posture determination control or the correction control when the car is in the charging state. According to this aspect, the accuracy of the posture determination control improves. Also, the effect of the correction control can be effectively applied to the occupant. The control device 78 may limit or prohibit the posture determination control or the correction control based on the remaining power of the battery. The control device 78 may limit or prohibit the posture determination control or the correction control when the remaining power of the battery is less than a predetermined amount (for example, when the SOC is less than 20 %).

The control device 78 preferably executes or enables execution of the posture determination control or the correction control when the number of occupants in the car is one. The control device 78 may limit or prohibit the posture determination control or the correction control when the number of occupants in the car is plural.

The control device 78 may limit or prohibit the posture determination control or the correction control when conversation between the occupants in the car is detected, when the audio system is used, or when the television set is used. Thereby, it is easy for the occupant to concentrate on the conversation, music, television, etc. The control device 78 may execute or enable execution of the posture determination control or the correction control when end of the conversation between the occupants in the car is detected, end of use of the audio system is detected, end of use of the television set is detected.

The control device 78 may limit or prohibit the posture determination control or the correction control when the operation state of the air conditioner (particularly, start of operation of the air conditioner) is detected. Thereby, suppression of the posture determination control or the correction control in an uncomfortable temperature environment becomes possible.

The control device 78 may execute or enable execution of the posture determination control or the correction control when it detects start of operation of the air conditioner and thereafter detects that the temperature in the car cabin has reached a set temperature (target temperature) of the air conditioner. Also, the control device 78 may execute or enable execution of the posture determination control or the correction control when it detects start of operation of the air conditioner and thereafter a predetermined time elapses.

The control device 78 may limit or prohibit the posture determination control or the correction control when the car interior temperature is higher than or equal to a predetermined value. The control device 78 may limit or prohibit the posture determination control or the correction control when the car interior humidity is higher than or equal to a predetermined value. Thereby, suppression of the posture determination control or the correction control in an uncomfortable temperature environment becomes possible.

The control device 78 may limit or prohibit the posture determination control or the correction control when the fatigue level of the occupant is higher than or equal to a predetermined value. The control device 78 may limit or prohibit the posture determination control or the correction control when the alertness level of the occupant is lower than or equal to a predetermined value.

The control device 78 may limit or prohibit the posture determination control or the correction control when it detects that the health condition of the occupant is abnormal. For example, the control device 78 may limit or prohibit the posture determination control or the correction control when the heart rate of the occupant is higher than or equal to a predetermined value. The control device 78 may limit or prohibit the posture determination control or the correction control based on the brain wave of the occupant. The control device 78 may limit or prohibit the posture determination control or the correction control when it detects that the brain wave of the occupant is abnormal.

The control device 78 may limit or prohibit the posture determination control or the correction control when it detects a state in which the posture of the occupant is inappropriate. Here, states in which the posture of the occupant is inappropriate include a state in which the posture of the occupant is hunched, lordotic, or laterally tilted, a state in which the seating position is out of place, etc. Also, the control device 78 may limit or prohibit the posture determination control or the correction control when it detects that the posture of the occupant is not a driving posture.

The control device 78 may execute or enable execution of the posture determination control or the correction control when it detects that the state of the seat 1 is a driving state. Here, that the state of the seat 1 is a driving state means that the seat 1 is in a state suitable for driving the car. Whether the seat 1 is in the driving state is preferably determined based on the reclining angle and the angle of the ottoman 140. The control device 78 may limit or prohibit the posture determination control or the correction control based on the operation state (ottoman angle) of the ottoman 140.

The control device 78 may limit or prohibit the posture determination control or the correction control when it detects that the state of the seat 1 is not a driving state.

The control device 78 may limit or prohibit the posture determination control or the correction control when it detects that the seat 1 is in a state rotated about the vertical axis. The state in which the seat 1 is rotated about the vertical axis refers to a state in which the seat 1 is rotated from the initial position. The initial position of the seat 1 refers to a state in which the seat 1 faces forward.

When the car is driving autonomously, the control device 78 may execute or enable execution of the posture determination control or the correction control regardless of whether the seat 1 is in a state rotated about the vertical axis. Thereby, detection of the posture and correction of the posture can be performed when there is no influence on the driving.

The control device 78 may change the occupant posture detection method or the occupant posture correction method (correcting method) based on the traveling state of the car (vehicle speed, vehicle speed fluctuation, etc.).

The control device 78 may limit or prohibit the posture determination control or the correction control when the traveling state of the car is not in cruise control.

The control device 78 may limit or prohibit the posture determination control or the correction control when a magnitude of behavior of the occupant is greater than or equal to a predetermined value (when shaking of the car or shaking of the occupant is extremely greater than usual). Here, the behavior of the occupant is preferably determined based on the forward-backward acceleration, lateral acceleration, and vertical acceleration of the car.

The control device 78 may limit or prohibit the posture determination control or the correction control based on a level of the curve (curvature) of the road on which the car is traveling and a continuous distance (time) of the curve. The level of the curve of the road and the continuous distance of the curve are preferably acquired from the map information.

The control device 78 may predict the lateral acceleration of the car based on the map information and may limit or prohibit the posture determination control or the correction control based on the lateral acceleration. The control device 78 may limit or prohibit the posture determination control or the correction control based on the road surface condition. The road surface condition is preferably determined based on the road surface image acquired by the external camera 98. Thereby, the posture determination control and the correction control when the road surface is in an inappropriate state are suppressed.

The control device 78 may limit or prohibit the posture determination control or the correction control when the car is passing the preceding car. Whether the car is passing the preceding car is preferably determined based on the vehicle speed and the operation state of the direction indicator, for example. Thereby, the posture determination control and the correction control are suppressed when the traveling state is unstable.

The control device 78 may stop the correction control or lower the amount of actuation in the correction control when travel time is longer than a predetermined value (for example, two hours). Also, the control device 78 may execute the posture determination control when the travel time becomes longer than a predetermined value and may execute the correction control based on the result thereof.

The control device 78 may limit or prohibit the correction control based on road surface conditions or weather. Here, road surface conditions include irregularities of the road surface, presence of snow or ice, etc. Weather includes heavy rain, strong wind, snow, etc.

The control device 78 may execute or enable execution of the posture determination control or the correction control when the battery is being charged or the battery is being replaced. Thereby, it is possible to execute the posture determination control or the correction control by using the time during charging or battery replacement. In another embodiment, the control device 78 may prohibit the posture determination control or the correction control when the battery is being charged or the battery is being replaced.

The control device 78 may execute the posture determination control or the correction control when the battery is being charged or the battery is being replaced, and thereafter, when the occupant performs a motion or exercise in the car cabin, may give points based on the amount of exercise. Preferably, the points can be used to pay fees for charging or replacing the battery, etc. The motion or exercise of the occupant and the amount of exercise are preferably determined based on the image acquired by the in-car camera 157. Also, the motion or exercise may be performed by using an application for promoting exercise on the seat 1. In this case, presence or absence of exercise or the like is preferably determined based on use of the application. Thereby, execution of the posture determination control or the correction control is promoted.

When it is detected that the occupant does exercise while being seated on the seat 1, the control device 78 preferably executes the massage control, the posture determination control, or the correction control after the exercise ends. A car provided with a car cabin in which the amount of exercise can be measured or a car cabin in which a game can be played may be configured to be capable of transferring acquired points to another car. The acquired points may be convertible to points for other games.

The control device 78 may change the posture detection method based on the amount of vibration of the car. The control device 78 may correct the determination result in the posture determination control based on the amount of vibration of the car or may correct the amount of correction in the correction control based on the amount of vibration of the car. The greater the amount of vibration is, the more the discomfort of the occupant is suppressed by limiting or reducing the amount of correction. The control device 78 preferably changes the posture detection method based on the forward-backward acceleration, lateral acceleration, and vertical acceleration produced in the car. The control device 78 may limit the amount of correction during turning compared to when the car is traveling straight, to suppress discomfort of the occupant. Also, the control device 78 may change the posture detection method based on the road condition. For example, when the car is traveling on a rough road, the amount of correction may be limited compared to when the car is traveling on a normal road.

The control device 78 may execute or enable execution of the massage control, the posture determination control, or the correction control when the seat 1 is in the most forward position relative to the floor 2 or when the seat 1 is in the most rearward position relative to the floor 2. The control device 78 may limit or prohibit the massage control, the posture determination control, or the correction control when the car is traveling.

The control device 78 may limit or prohibit the massage control, the posture determination control, or the correction control when the seat 1 is moving. The movement of the seat 1 includes movement in the front-rear direction, movement in the left-right direction, and rotation about the vertical axis. Thereby, the posture determination control and the correction control when the seat 1 is in an unstable state are suppressed, and lowering of determination accuracy and correction effect of the posture determination control is suppressed. In another embodiment, the control device 78 may execute or enable execution of the massage control, the posture determination control, or the correction control when the seat 1 is moving.

In a case where multiple seats 1 are provided on a common lower rail 11A, there is a high possibility that the movement time of the seat 1 becomes longer than usual. Therefore, the control device 78 may execute or enable execution of the massage control, the posture determination control, or the correction control by using the movement time of the seat 1.

The control device 78 may execute the massage control, the posture determination control, or the correction control based on the signal from the switch 99. Also, the control device 78 may limit or prohibit the massage control, the posture determination control, or the correction control based on the signal from the switch 99. The switch 99 is preferably an operation priority switch, an operation limit switch, an operation prohibition switch, or the like.

The control device 78 may execute or prohibit the massage control, the posture determination control, or the correction control based on a machine learning model. Also, the control device 78 may limit or prohibit the massage control, the posture determination control, or the correction control based on a machine learning model. The machine learning model preferably makes determination on execution or prohibition of the massage control, the posture determination control, or the correction control based on an environment that may affect the occupant. The environment that may affect the occupant (occupant environment) includes the state of the vehicle (traveling state, stopped state, parked state, rearward moving state), the environment inside the vehicle (the number of occupants, a state of conversation between the occupants, a state in which music is being played, a state in which the television set is on, an operation state of the air conditioner, temperature and humidity inside the vehicle, etc.), the state of the occupant (fatigue level, alertness level, health condition, brain wave state, posture, etc.), the state of the seat 1 (driving posture, relaxing posture in which the seatback 4 is tilted backward, resting or napping state in which the seatback 4 is tilted near horizontally, a state in which the seat 1 is rotated, etc.), the charging state of the vehicle (the battery is being charged or the battery is being replaced while the vehicle is parked), the road surface conditions (irregularities of the road surface, snow-covered road, etc.), the weather (heavy rain, strong wind, snow), and the state in which the vehicle is passing the preceding vehicle (when the direction indicator is operated).

The control device 78 may limit or prohibit the massage control, the posture determination control, or the correction control when the navigation device 97 is operated. The operation of the navigation device 97 includes setting the destination or the like, for example. Thereby, it is easy for the occupant to concentrate on the operation of the navigation device.

The control device 78 may limit or prohibit the massage control, the posture determination control, or the correction control when the car has arrived at the destination set in the navigation device 97 or when the time until arrival at the destination is less than a predetermined time.

The control device 78 may limit or prohibit the massage control, the posture determination control, or the correction control when a state in which the car is stopped at a red light is detected. Thereby, when the travel of the car is resumed, adverse effects to the occupants including the driver can be suppressed.

The control device 78 may execute or enable execution of the massage control, the posture determination control, or the correction control when it determines that the traffic light waiting time is longer than the time required for execution of the posture determination control.

The control device 78 may execute or enable execution of the massage control, the posture determination control, or the correction control when the car is stopped and idling is stopped. Since the posture determination control is executed in the state in which the vibration of the car is small, the posture determination accuracy improves.

The control device 78 may limit or prohibit the massage control, the posture determination control, or the correction control when shift operation of the transmission is performed. Since the posture determination control is executed to avoid the vibration generated by the shift operation, the posture determination accuracy can be improved.

The control device 78 may execute or enable execution of the massage control, the posture determination control, or the correction control when the head of the occupant is in contact with the headrest 5. The control device 78 preferably determines whether the head of the occupant is in contact with the headrest 5 based on the signal from a pressure sensor provided in the headrest 5. Thereby, the posture determination accuracy improves. Also, the posture correction accuracy improves. Further, appropriate massage becomes possible.

The control device 78 may limit or prohibit the massage control, the posture determination control, or the correction control when the seatback 4 is tilted more backward than the normal position suitable for driving and the head of the occupant is in contact with the headrest 5. Thereby, posture determination, posture correction, and performance of massage in an inappropriate posture are suppressed, and discomfort of the occupant is reduced.

The control device 78 may execute or enable execution of the massage control, the posture determination control, or the correction control when the seatback 4 is in the normal position suitable for driving and the head of the occupant is in contact with the headrest 5. Thereby, the posture determination accuracy improves. Also, the posture correction accuracy improves. Further, appropriate massage becomes possible.

The control device 78 may execute or enable execution of the massage control, the posture determination control, or the correction control when the car is in the autonomous driving mode. Thereby, the posture determination, posture correction, performance of massage are possible without affecting the driving. The control device 78 preferably acquires information regarding the state of the car from the control device 78 of the car.

The control device 78 may limit or prohibit the massage control, the posture determination control, or the correction control when the car is in a transition state from the autonomous driving mode to the manual driving mode. Thereby, the occupant who is the driver can prepare for manual driving.

The control device 78 may execute or enable execution of the massage control, the posture determination control, or the correction control when the period of the transition state is longer than the time required for execution of the posture determination control.

The control device 78 may make a notification to recommend the massage control, the posture determination control, or the correction control when the car starts autonomous driving. Thereby, it is possible to provide posture correction or massage to the driver during autonomous driving.

The control device 78 may limit or prohibit the massage control, the posture determination control, or the correction control when the car is traveling on an expressway. The control device 78 preferably determines whether the car is traveling on an expressway based on the position of the own car and the map information. Thereby, the occupant can concentrate on the driving on expressways which require more caution than ordinary roads.

The control device 78 may execute or enable execution of the massage control, the posture determination control, or the correction control when the car is traveling on an expressway. Thereby, the posture determination, posture correction, and performance of massage become possible when the car is traveling stably.

The control device 78 may execute or enable execution of the massage control, the posture determination control, or the correction control when the car is conducting vehicle following control to follow the preceding vehicle. The control device 78 preferably acquires information regarding whether the car is conducting vehicle following control from a travel control device 170 of the car. Thereby, the posture determination, posture correction, and performance of massage become possible during vehicle following travel in which driving burden is reduced.

The control device 78 may limit or prohibit the massage control, the posture determination control, or the correction control when the car is conducting vehicle following control to follow the preceding vehicle. Thereby, the driver can focus on paying attention to the preceding vehicle.

The control device 78 may execute or enable execution of the massage control, the posture determination control, or the correction control when the car is conducting lane keep control. The lane keep control refers to the control for making the car travel along the lane. The control device 78 preferably acquires information regarding whether the car is conducting lane keep control from the travel control device 170 of the car. Thereby, the posture determination, posture correction, and performance of massage become possible during execution of the lane keep control in which driving burden is reduced.

The control device 78 may limit or prohibit the massage control, the posture determination control, or the correction control when the car is conducting lane keep control. Thereby, the driver can concentrate on driving.

The control device 78 may limit or prohibit the massage control, the posture determination control, or the correction control when the car transitions from an expressway to an ordinary road. Thereby, the driver can concentrate on driving. The control device 78 preferably determines whether the car is transitioning from an expressway to an ordinary road based on the position of the car and the map information.

The control device 78 may limit or prohibit the massage control, the posture determination control, or the correction control when an abnormality is detected in at least one of the car, the occupant, the seat 1, and equipment related to the seat 1. The equipment related to the seat 1 includes the heater 82, the blower 57 (air blower), the seating sensor 151, a side airbag 90, the vibrators 150, the speaker 93, the display 94, etc.

Regarding the seat 1, optimal combination of the occupant posture determination control, the occupant posture correction control, the massage control, and the heater control is required.

When conducting the posture determination control, the control device 78 preferably activates the heater 82 to raise the temperature of a predetermined part. In another embodiment, the control device 78 preferably stops the heater 82 when conducting the posture determination control. Also, the control device 78 preferably prohibits activation of the heater 82 when conducting the posture determination control. Also, the control device 78 may put the heater 82 in a limit mode when conducting the posture determination control. In the limit mode, the output of the heater 82 is suppressed than in the normal mode. Namely, the amount of electric current flowing through the heater 82 is suppressed.

The control device 78 preferably activates the heater 82 to raise the temperature of a predetermined part when conducting the massage control. In another embodiment, the control device 78 preferably stops the heater 82 when conducting the massage control. Also, the control device 78 preferably prohibits activation of the heater 82 when conducting the massage control. Also, the control device 78 may put the heater 82 in the limit mode when conducting the massage control.

The control device 78 preferably activates the heater 82 to raise the temperature of a predetermined part when conducting the correction control. In another embodiment, the control device 78 preferably stops the heater 82 when conducting the correction control. Also, the control device 78 preferably prohibits activation of the heater 82 when conducting the correction control. Also, the control device 78 may put the heater 82 in the limit mode when conducting the correction control.

The control device 78 preferably activates the blower 57 to send air to a predetermined part when conducting the posture determination control. In another embodiment, the control device 78 preferably stops the blower 57 when conducting the posture determination control. Also, the control device 78 preferably prohibits activation of the blower 57 when conducting the posture determination control. Also, the control device 78 may put the blower 57 in the limit mode when conducting the posture determination control. In the limit mode, the output of the blower 57 is suppressed than in the normal mode. Namely, the amount of electric current flowing through the blower 57 is suppressed.

The control device 78 preferably activates the blower 57 to send air to a predetermined part when conducting the massage control. In another embodiment, the control device 78 preferably stops the blower 57 when conducting the massage control. Also, the control device 78 preferably prohibits activation of the blower 57 when conducting the massage control. Also, the control device 78 may put the blower 57 in the limit mode when conducting the massage control. In the limit mode, the output of the blower 57 is suppressed than in the normal mode. Namely, the amount of electric current flowing through the blower 57 is suppressed.

The control device 78 preferably activates the blower 57 to send air to a predetermined part when conducting the correction control. In another embodiment, the control device 78 preferably stops the blower 57 when conducting the correction control. Also, the control device 78 preferably prohibits activation of the blower 57 when conducting the correction control. Also, the control device 78 may put the blower 57 in the limit mode when conducting the correction control. In the limit mode, the output of the blower 57 is suppressed than in the normal mode. Namely, the amount of electric current flowing through the blower 57 is suppressed.

The control device 78 preferably activates the slide rail 11 to move the seat 1 relative to the floor 2 when conducting the posture determination control. In another embodiment, the control device 78 preferably stops the slide rail 11 when conducting the posture determination control. Namely, the control device 78 preferably prevents the upper rail 11B from moving relative to the lower rail 11A. Also, the control device 78 may put the slide rail 11 in the limit mode when conducting the posture determination control. In the limit mode, the movement speed of the slide rail 11 is suppressed than in the normal mode.

The control device 78 preferably activates the slide rail 11 to move the seat 1 relative to the floor 2 when conducting the massage control. In another embodiment, the control device 78 preferably stops the slide rail 11 when conducting the massage control. Namely, the control device 78 preferably prevents the upper rail 11B from moving relative to the lower rail 11A. Also, the control device 78 may put the slide rail 11 in the limit mode when conducting the massage control. In the limit mode, the movement speed of the slide rail 11 is suppressed than in the normal mode.

The control device 78 preferably activates the slide rail 11 to move the seat 1 relative to the floor 2 when conducting the correction control. In another embodiment, the control device 78 preferably stops the slide rail 11 when conducting the correction control. Namely, the control device 78 preferably prevents the upper rail 11B from moving relative to the lower rail 11A. Also, the control device 78 may put the slide rail 11 in the limit mode when conducting the correction control. In the limit mode, the movement speed of the slide rail 11 is suppressed than in the normal mode.

The control device 78 may activate predetermined vibrators 150 when conducting the posture determination control. Thereby, predetermined parts of the occupant are stimulated by the vibrators 150. In another embodiment, the control device 78 may prohibit activation of the vibrators 150 when conducting the posture determination control. The control device 78 may put the vibrators 150 in the limit mode when conducting the posture determination control. In the limit mode, the output of the vibrators 150 is suppressed than in the normal mode. The output of the vibrators 150 may be suppressed by lowering the amplitude, lowering the frequency, or shortening the vibration time.

The control device 78 may activate predetermined vibrators 150 when conducting the massage control. Thereby, predetermined parts of the occupant are stimulated by the vibrators 150. In another embodiment, the control device 78 may prohibit activation of the vibrators 150 when conducting the massage control. The control device 78 may put the vibrators 150 in the limit mode when conducting the massage control.

The control device 78 may activate predetermined vibrators 150 when conducting the correction control. Thereby, predetermined parts of the occupant are stimulated by the vibrators 150. In another embodiment, the control device 78 may prohibit activation of the vibrators 150 when conducting the correction control. The control device 78 may put the vibrators 150 in the limit mode when conducting the correction control.

The control device 78 may actuate at least one of the armrest 88 and the table 160 when conducting the posture determination control. The control device 78 may move the armrest 88 to the use position when conducting the posture determination control. Also, the control device 78 may move the table 160 to the use position when conducting the posture determination control. In another embodiment, the control device 78 may prohibit actuation of the armrest 88 and the table 160 when conducting the posture determination control. Also, the control device 78 may move the armrest 88 and the table 160 to the stowed position when conducting the posture determination control. The control device 78 may put the armrest 88 and the table 160 in the limit mode when conducting the posture determination control. In the limit mode, the movement speed of the armrest 88 and the table 160 is suppressed than in the normal mode.

The control device 78 may actuate at least one of the armrest 88 and the table 160 when conducting the massage control. The control device 78 may move the armrest 88 to the use position when conducting the massage control. Also, the control device 78 may move the table 160 to the use position when conducting the massage control. In another embodiment, the control device 78 may prohibit actuation of the armrest 88 and the table 160 when conducting the massage control. Also, the control device 78 may move the armrest 88 and the table 160 to the stowed position when conducting the massage control. The control device 78 may put the armrest 88 and the table 160 in the limit mode when conducting the massage control. In the limit mode, the movement speed of the armrest 88 and the table 160 is suppressed than in the normal mode.

The control device 78 may actuate at least one of the armrest 88 and the table 160 when conducting the correction control. The control device 78 may move the armrest 88 to the use position when conducting the correction control. Also, the control device 78 may move the table 160 to the use position when conducting the correction control. In another embodiment, the control device 78 may prohibit actuation of the armrest 88 and the table 160 when conducting the correction control. Also, the control device 78 may move the armrest 88 and the table 160 to the stowed position when conducting the correction control. The control device 78 may put the armrest 88 and the table 160 in the limit mode when conducting the correction control. In the limit mode, the movement speed of the armrest 88 and the table 160 is suppressed than in the normal mode.

The control device 78 may actuate at least one of the reclining device 24, the lift device 12, the ottoman 140, the front member 32, the shoulder fluid bags 71, and the side fluid bags 86 when conducting the posture determination control. In another embodiment, the control device 78 may prohibit actuation of at least one of the reclining device 24, the lift device 12, the ottoman 140, the front member 32, the shoulder fluid bags 71, and the side fluid bags 86 when conducting the posture determination control. Also, the control device 78 may put at least one of the reclining device 24, the lift device 12, the ottoman 140, the front member 32, the shoulder fluid bags 71, and the side fluid bags 86 in the limit mode when conducting the posture determination control. In the limit mode, the amount of actuation is suppressed than in the normal mode.

The control device 78 may actuate at least one of the reclining device 24, the lift device 12, the ottoman 140, the front member 32, the shoulder fluid bags 71, and the side fluid bags 86 when conducting the massage control. In another embodiment, the control device 78 may prohibit actuation of at least one of the reclining device 24, the lift device 12, the ottoman 140, the front member 32, the shoulder fluid bags 71, and the side fluid bags 86 when conducting the massage control. Also, the control device 78 may put at least one of the reclining device 24, the lift device 12, the ottoman 140, the front member 32, the shoulder fluid bags 71, and the side fluid bags 86 in the limit mode when conducting the massage control. In the limit mode, the amount of actuation is suppressed than in the normal mode.

The control device 78 may actuate at least one of the reclining device 24, the lift device 12, the ottoman 140, the front member 32, the shoulder fluid bags 71, and the side fluid bags 86 when conducting the correction control. In another embodiment, the control device 78 may prohibit actuation of at least one of the reclining device 24, the lift device 12, the ottoman 140, the front member 32, the shoulder fluid bags 71, and the side fluid bags 86 when conducting the correction control. Also, the control device 78 may put at least one of the reclining device 24, the lift device 12, the ottoman 140, the front member 32, the shoulder fluid bags 71, and the side fluid bags 86 in the limit mode when conducting the correction control. In the limit mode, the amount of actuation is suppressed than in the normal mode.

The control device 78 preferably prohibits the posture determination control when activating the side airbag 90. The control device 78 preferably activates the side airbag 90 when the forward-backward acceleration is higher than or equal to a predetermined value, for example. Activation of the side airbag 90 may be controlled by another control device 78 that is independent from the control device 78. In this case, the control device 78 preferably prohibits the posture determination control when the forward-backward acceleration is greater than or equal to the value at which the side airbag 90 is activated.

The control device 78 preferably prohibits the massage control when activating the side airbag 90. The control device 78 may prohibit the massage control when the forward-backward acceleration is greater than or equal to the value at which the side airbag 90 is activated.

The control device 78 preferably prohibits the correction control when activating the side airbag 90. The control device 78 may prohibit the correction control when the forward-backward acceleration is greater than or equal to the value at which the side airbag 90 is activated.

The control device 78 may execute or enable execution of the posture determination control, the correction control, or the massage control when the occupant is in contact with the steering device. The steering device includes a steering wheel, a joystick or the like. The steering device is preferably provided with a sensor, such as a capacitance sensor or a pressure sensor, for detecting contact by the occupant. Also, the control device 78 may determine whether the occupant is in contact with the steering device based on the image of the occupant acquired by the in-car camera 157. The state in which the occupant is in contact with the steering device includes a state in which the occupant touches the steering device and a state in which the occupant grips the steering device. Thereby, posture determination, posture correction, or massage of the occupant during driving becomes possible. When the occupant is in contact with the steering device, the position of the occupant is stable, and thus, the posture determination, posture correction, or massage can be properly executed.

The control device 78 may prohibit or limit the posture determination control, correction control, or massage control when the occupant is in contact with the steering device. Thereby, posture determination, posture correction, or massage of the occupant during driving can be suppressed.

The control device 78 may execute or enable execution of the posture determination control, the correction control, or the massage control when the occupant is in contact with the steering device and the car is stopped. Also, the control device 78 may prohibit or suppress the posture determination control, the correction control, or massage control when the occupant is in contact with the steering device and the car is stopped. The control device 78 preferably determines that the car is stopped when the vehicle speed is lower than or equal to a predetermined value.

The control device 78 may execute or enable execution of the posture determination control, the correction control, or the massage control when the occupant is in a specific activity state. Also, the control device 78 may prohibit or suppress the posture determination control, the correction control, or the massage control when the occupant is in a specific activity state. The specific activity state includes, for example, an eating/drinking state in which the occupant is eating/drinking, a studying state in which the occupant is studying, a business state in which the occupant is working, a reading state in which the occupant is reading, an information terminal using state in which the occupant is using an information terminal such as a smartphone, or the like. The control device 78 preferably determines whether the occupant is in the specific activity state based on the image of the occupant acquired by the in-car camera 157. Also, the control device 78 preferably determines whether the occupant is in the specific activity state based on the position of the table 160, the signal from the switch 99 operated by the occupant, or the like.

The control device 78 may execute or enable execution of the posture determination control, the correction control, or the massage control when the occupant is in the eating/drinking state. The control device 78 preferably determines whether the occupant is in the eating/drinking state based on the image of the occupant acquired by the in-car camera 157, for example. Also, the control device 78 may determine that the occupant is in the eating/drinking state when the table 160 is in the use position. Also, the control device 78 may determine that the occupant is in the eating/drinking state based on the signal from the switch 99 operated by the occupant. The control device 78 may execute or enable execution of the posture determination control, the correction control, or the massage control when the occupant is in the eating/drinking state and the car is stopped.

In another embodiment, the control device 78 may prohibit or suppress the posture determination control, the correction control, or the massage control when the occupant is in the eating/drinking state. Also, the control device 78 may prohibit or suppress the posture determination control, the correction control, or the massage control when the occupant is in the eating/drinking state and the car is stopped. Also, the control device 78 may prohibit or suppress the posture determination control, the correction control, or the massage control before a predetermined period (for example, 20 minutes) elapses after the eating/drinking state of the occupant is finished.

In another embodiment, multiple pressure sensors may be provided in appropriate positions on the seat cushion and the seatback 4, and the control device 78 may determine the posture of the occupant based on the pressure distribution detected by the multiple pressure sensors. Also, the control device 78 may determine the posture of the occupant based on the image of the occupant acquired by the in-car camera 157.

The control device 78 preferably prohibits or stops the posture determination control and the correction control when it determines that the upper body of the occupant is tilted a predetermined degree or more in the left-right direction based on the front image of the occupant in the seated state acquired by the in-car camera 157. The control device 78 preferably causes the side fluid bag 86 or the shoulder fluid bag 71 on the same side to which the upper body of the occupant is tilted to inflate when it determines that the upper body of the occupant is tilted a predetermined degree or more in the left-right direction based on the front image of the occupant in the seated state acquired by the in-car camera 157. Thereby, the upper body of the occupant is guided toward the center in the left-right direction.

The control device 78 may execute the correction control after the occupant exercises. For example, in a case where the control device 78 has an exercise application for promoting motion of the body of the occupant, the control device 78 may execute the correction control after the exercise application is executed. The exercise application causes the display 94 to display commands related to the motion of the body, for example. The occupant preferably moves the body according to the commands. The motion of the body of the occupant is preferably detected by the pressure sensors provided on the seat 1 or the in-car camera 157.

The control device 78 may limit or prohibit the posture determination control or the correction control based on the remaining power of the battery. At this time, the control device 78 may enable actuation of at least one of the reclining device 24, the lift device 12, the ottoman 140, the front member 32, the shoulder fluid bags 71, and the side fluid bags 86.

The control device 78 may limit or prohibit the posture determination control or the correction control during charging of the battery. At this time, the control device 78 may enable actuation of at least one of the reclining device 24, the lift device 12, the ottoman 140, the front member 32, the shoulder fluid bags 71, and the side fluid bags 86.

Concrete embodiments have been described in the foregoing, but the present invention can be modified in various ways without being limited to the above embodiments. The seat 1 may be used for applications other than vehicles and may be applied to sofas and reclining beds.

### LIST OF REFERENCE NUMERALS

- 1:: seat
- 3:: seat cushion
- 4:: seatback
- 21:: seatback frame
- 22:: seatback pad
- 41:: seatback side member
- 42:: upper member
- 43:: lower member
- 45:: cross member
- 48:: wire
- 51:: waist pressure receiving part
- 52:: shoulder pressure receiving part
- 56:: bracket
- 57:: blower
- 61:: front fluid bag
- 61A:: upper end fluid bag
- 62:: fluid supply source
- 63:: upper fluid bag
- 65:: rear fluid bag
- 65A:: first rear fluid bag
- 65B:: second rear fluid bag
- 65C:: third rear fluid bag
- 66:: overlapping part
- 68:: middle fluid bag
- 71:: shoulder fluid bag
- 73:: fluid control valve
- 75:: first internal pressure sensor
- 76:: second internal pressure sensor
- 78:: control device
- 86:: side fluid bag

## Claims

1. A vehicle seat comprising a seat cushion and a seatback,
the seatback comprising:
a seatback frame;
a waist pressure receiving part provided on the seatback frame to support a waist of an occupant;
left and right shoulder pressure receiving parts provided on the seatback frame above the waist pressure receiving part to support left and right shoulder portions of the occupant;
a pad supported by the seatback frame, the waist pressure receiving part, and the left and right shoulder pressure receiving parts;
multiple front fluid bags arranged vertically on a front surface of the pad; and
a control device that determines a posture of the occupant based on internal pressures of the multiple front fluid bags,
wherein an upper end fluid bag which is disposed highest among the multiple front fluid bags is disposed between the left and right shoulder pressure receiving parts as seen from front.

2. The vehicle seat according to claim 1, comprising multiple rear fluid bags arranged vertically between a front surface of the waist pressure receiving part and a rear surface of the pad,
wherein the multiple rear fluid bags have overlapping parts that overlap each other as seen in a front-rear direction, and
the upper end fluid bag is disposed higher than the overlapping parts as seen from front.

3. The vehicle seat according to claim 2, wherein at least one of the multiple front fluid bags overlaps the overlapping part as seen from front.

4. The vehicle seat according to claim 1, wherein the waist pressure receiving part and the left and right shoulder pressure receiving parts are coupled to each other by left and right coupling parts, and
the upper end fluid bag overlaps the left and right coupling parts as seen from front.

5. The vehicle seat according to claim 1, wherein the waist pressure receiving part and the left and right shoulder pressure receiving parts are coupled to each other by left and right coupling parts, and
the upper end fluid bag is disposed not to overlap the left and right coupling parts as seen from front.

6. The vehicle seat according to claim 2, wherein a blower is supported on the seatback frame, and
each of the multiple rear fluid bags is disposed forward of the blower.

7. The vehicle seat according to claim 1, wherein the seatback frame comprises left and right side members that extend vertically and an upper member that extends laterally and is joined to upper ends of the left and right side members, and
the upper end fluid bag is disposed higher than joining parts of the left and right side members with the upper member.

8. The vehicle seat according to claim 1, wherein the seatback frame comprises left and right side members that extend vertically and an upper member that extends laterally and is joined to upper ends of the left and right side members, and
the upper end fluid bag is disposed lower than joining parts of the left and right side members with the upper member.

9. The vehicle seat according to claim 1, wherein a lower end of the upper end fluid bag is disposed higher than a lower end of each of the left and right shoulder pressure receiving parts.

10. The vehicle seat according to claim 1 or 9, wherein an upper end of the upper end fluid bag is disposed lower than an upper end of each of the left and right shoulder pressure receiving parts.
